# EUROPEAN PATENT APPLICATION

(11) **EP 4 642 060 A2**
(43) Date of publication of application: **29.10.2025**
(21) Application number: 25193956.7
(22) Date of filing: 29.11.2021
(51) Int. Cl.: H04W 4/06

(54) **METHOD AND DEVICE FOR SUPPORTING MULTICAST TRANSMISSION**

(30) Priority: 27.11.2020 KR 20200163357; 03.11.2021 KR 20210150062
(62) Divisional of application: 21898726.1
(71) Applicant: Electronics and Telecommunications Research Institute, Daejeon 34129 (KR)
(72) Inventor: Cheul Soon, KIM, 34129 Daejeon (KR); MOON, Sung Hyun, 34129 Daejeon (KR); LEE, Jung Hoon, 34129 Daejeon (KR)
(74) Representative: Betten & Resch

(57) **Abstract**

A method and a device for supporting multicast transmission are disclosed. A terminal operating method comprises the steps of: receiving, from a base station, an RRC message indicating the activation of HARQ-ACK feedback; receiving, from the base station, a first DCI including information indicating deactivation of the HARQ-ACK feedback; receiving, from the base station, a first multicast PDSCH on the basis of first scheduling information included in the first DCI; generating a first HARQ-ACK bit for the first multicast PDSCH even if the first DCI indicates deactivation of the HARQ-ACK feedback; generating a HARQ codebook including the first HARQ-ACK bit; and transmitting, to the base station, the HARQ codebook through an uplink channel.

## Description

### [Technical Field]

The present disclosure relates to a multicast technique, and more particularly, to a technique for transmitting and receiving a multicast physical downlink shared channel (PDSCH) and a multicast hybrid automatic repeat request (HARQ) feedback.

### [Background Art]

With the development of information and communication technology, various wireless communication technologies have been developed. Typical wireless communication technologies include long term evolution (LTE) and new radio (NR), which are defined in the 3^{rd} generation partnership project (3GPP) standards. The LTE may be one of 4th generation (4G) wireless communication technologies, and the NR may be one of 5th generation (5G) wireless communication technologies.

The 5G communication system (e.g., communication system supporting the NR) using a higher frequency band (e.g., frequency band of 6GHz or above) than a frequency band (e.g., frequency band of 6GHz or below) of the 4G communication system is being considered for processing of wireless data soaring after commercialization of the 4G communication system (e.g., communication system supporting the LTE). The 5G communication system can support enhanced mobile broadband (eMBB), ultra-reliable low-latency communication (URLLC), massive machine type communication (mMTC), and the like.

Meanwhile, a base station may transmit a plurality of PDSCHs to a terminal, and the terminal may receive the plurality of PDSCHs from the base station. In this case, priorities of the plurality of PDSCHs may be different from each other, and types (e.g., multicast or unicast) of the plurality of PDSCHs may be different from each other. In this case, methods of generating a HARQ codebook for the plurality of PDSCHs and methods of transmitting the HARQ codebook are required.

### [Disclosure]

### [Technical Problem]

The present disclosure is directed to providing a method and an apparatus for transmitting and receiving a multicast PDSCH and a multicast HARQ feedback in a communication system.

### [Technical Solution]

According to a first exemplary embodiment of the present disclosure for achieving the objective, an operation method of a terminal may comprise: receiving, from a base station, a radio resource control (RRC) message indicating enabling of hybrid automatic repeat request-acknowledgement (HARQ-ACK) feedback; receiving, from the base station, first downlink control information (DCI) including information indicating disabling of the HARQ-ACK feedback; receiving, from the base station, a first multicast physical downlink shared channel (PDSCH) based on first scheduling information included in the first DCI; generating a first HARQ-ACK bit for the first multicast PDSCH even when the first DCI indicates disabling of the HARQ-ACK feedback; generating a HARQ codebook including the first HARQ-ACK bit; and transmitting, to the base station, the HARQ codebook on an uplink channel.

One field or a combination of two or more fields included in the first DCI may be used to indicate a priority of the first HARQ-ACK bit.

Even when the first DCI indicates disabling of the HARQ-ACK feedback, a type 1 (T1) HARQ codebook including the first HARQ-ACK bit may be generated when generation of the T1 HARQ codebook is indicated.

One field or a combination of two or more fields included in the first DCI may be used to indicate enabling or disabling of the HARQ-ACK feedback.

When disabling of the HARQ-ACK feedback is indicated, at least one of a HARQ round trip time (RTT) timer or a retransmission timer may not be started in the terminal.

The operation method may further comprise: receiving, from the base station, second DCI; and receiving, from the base station, a second multicast PDSCH based on second scheduling information included in the second DCI, wherein the HARQ codebook further includes a second HARQ-ACK bit for the second multicast PDSCH.

The HARQ codebook may include a first multicast HARQ sub-codebook including the first HARQ-ACK bit and a second multicast HARQ sub-codebook including the second HARQ-ACK bit, and the first multicast PDSCH and the second multicast PDSCH may be distinguished by different multicast identifiers.

The operation method may further comprise: receiving, from the base station, third DCI; and receiving, from the base station, a unicast PDSCH based on third scheduling information included in the third DCI, wherein the HARQ codebook further includes a third HARQ-ACK bit for the unicast PDSCH.

The generating of the HARQ codebook may comprise: generating a first multicast HARQ sub-codebook including the first HARQ-ACK bit; generating a unicast HARQ sub-codebook including the third HARQ-ACK bit; and generating the HARQ codebook by concatenating the first multicast HARQ sub-codebook and the unicast HARQ sub-codebook.

A type of the first multicast HARQ sub-codebook may be configured independently of a type of the unicast HARQ sub-codebook, and a priority of the first HARQ-ACK bit may be set to be equal to a priority of the third HARQ-ACK bit.

When frequency division multiplexing (FDM) scheduling for the first multicast PDSCH and the unicast PDSCH is allowed, the first multicast HARQ sub-codebook and the unicast HARQ sub-codebook may be independently generated.

According to a second exemplary embodiment of the present disclosure for achieving the objective, an operation method of a terminal may comprise: receiving, from a base station, first downlink control information (DCI) including information indicating disabling of hybrid automatic repeat request-acknowledgement (HARQ-ACK) feedback; receiving, from the base station, a first multicast physical downlink shared channel (PDSCH) based on first scheduling information included in the first DCI; generating a first HARQ-ACK bit for the first multicast PDSCH even when the first DCI indicates disabling of the HARQ-ACK feedback; generating a HARQ codebook including the first HARQ-ACK bit; and transmitting, to the base station, the HARQ codebook on an uplink channel, wherein even when the HARQ-ACK feedback is disabled, the first HARQ-ACK bit is generated when another HARQ-ACK bit is generated in the terminal and the first HARQ-ACK bit is multiplexable with the another HARQ-ACK bit.

When disabling of the HARQ-ACK feedback is indicated, at least one of a HARQ round trip time (RTT) timer or a retransmission timer may not be used in the terminal.

The operation method may further comprise: receiving, from the base station, second DCI; and receiving, from the base station, a second multicast PDSCH based on second scheduling information included in the second DCI, wherein the HARQ codebook further includes a second HARQ-ACK bit for the second multicast PDSCH.

The HARQ codebook may include a first multicast HARQ sub-codebook including the first HARQ-ACK bit and a second multicast HARQ sub-codebook including the second HARQ-ACK bit, and the first multicast PDSCH and the second multicast PDSCH may be distinguished by different multicast identifiers.

The first multicast HARQ sub-codebook and the second multicast HARQ sub-codebook may be concatenated in an order of the different multicast identifiers.

The operation method may further comprise receiving, from the base station, a radio resource control (RRC) message indicating that a negative ACK (NACK)-only feedback scheme is supported, wherein the first HARQ-ACK bit may be generated according to the NACK-only feedback scheme, and when the first HARQ-ACK bit is multiplexed with the another HARQ-ACK bit, the NACK-only feedback scheme may not be applied.

The operation method may further comprise: receiving, from the base station, third DCI; and receiving, from the base station, a unicast PDSCH based on third scheduling information included in the third DCI, wherein the HARQ codebook further includes a third HARQ-ACK bit for the unicast PDSCH.

The generating of the HARQ codebook may comprise: generating a first multicast HARQ sub-codebook including the first HARQ-ACK bit; generating a unicast HARQ sub-codebook including the third HARQ-ACK bit; and generating the HARQ codebook by concatenating the first multicast HARQ sub-codebook and the unicast HARQ sub-codebook, wherein the first multicast HARQ sub-codebook is identified by a multicast identifier.

When frequency division multiplexing (FDM) scheduling for the first multicast PDSCH and the unicast PDSCH is allowed, the first multicast HARQ sub-codebook and the unicast HARQ sub-codebook may be independently generated.

### [Advantageous Effects]

According to the present disclosure, a terminal may receive a multicast PDSCH and a unicast PDSCH from a base station, may generate a HARQ codebook including a HARQ-ACK bit for the multicast PDSCH and a HARQ-ACK bit for the unicast PDSCH, and transmit the HARQ codebook to the base station. When priorities of the PDSCHs are different, the terminal may generate the HARQ codebook in consideration of the priorities. The terminal may transmit the HARQ codebook to the base station based on an indication of the base station for enabling or disabling HARQ-ACK feedback. In particular, even when the HARQ-ACK feedback is disabled, the terminal may transmit the HARQ codebook to the base station as needed. Accordingly, a HARQ-ACK feedback procedure can be efficiently performed, and the performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a multicast transmission method.
FIG. 4 is a conceptual diagram illustrating a first exemplary embodiment of a PDSCH allocation method.
FIG. 5A is a conceptual diagram illustrating a second exemplary embodiment of a PDSCH allocation method.
FIG. 5B is a conceptual diagram illustrating a third exemplary embodiment of a PDSCH allocation method.
FIG. 6A is a conceptual diagram illustrating a first exemplary embodiment of a PUCCH allocation method.
FIG. 6B is a conceptual diagram illustrating a second exemplary embodiment of a PUCCH allocation method.
FIG. 7 is a conceptual diagram illustrating a first exemplary embodiment of a PUCCH transmission timing.
FIG. 8 is a conceptual diagram illustrating a first exemplary embodiment of a temporal order of a PDCCH and a PUCCH in unicast/multicast transmission.
FIG. 9 is a block diagram illustrating a first exemplary embodiment of a method for generating a HARQ codebook based on Method 4.1-1.
FIG. 10 is a block diagram illustrating a second exemplary embodiment of a method for generating a HARQ codebook based on Method 4.1-1.
FIG. 11 is a block diagram illustrating a first exemplary embodiment of a method for generating a HARQ codebook based on Method 4.1-6.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the term 'communication system' may be used in the same sense as a 'communication network'.

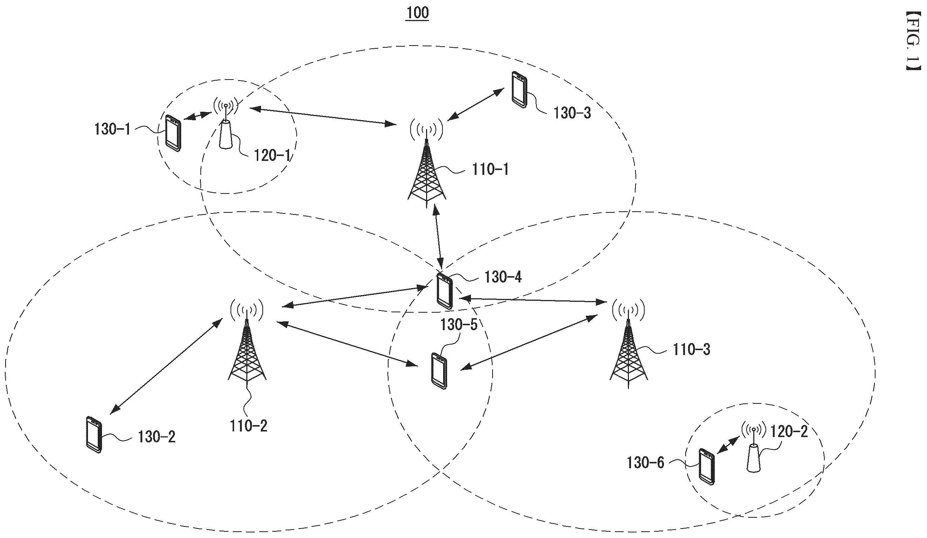

FIG. 1 is a conceptual diagram illustrating a first exemplary embodiment of a communication system.

Referring to FIG. 1, a communication system 100 may include a plurality of communication nodes 110-1, 110-2, 110-3, 120-1, 120-2, 130-1, 130-2, 130-3, 130-4, 130-5, and 130-6. In addition, the communication system 100 may further include a core network (e.g., serving-gateway (S-GW), packet data network (PDN)-gateway (P-GW), and mobility management entity (MME)). When the communication system 100 is the 5G communication system (e.g., NR system), the core network may include an access and mobility management function (AMF), a user plane function (UPF), a session management function (SMF), and the like.

The plurality of communication nodes 110 to 130 may support the communication protocols (e.g., LTE communication protocol, LTE-A communication protocol, NR communication protocol, etc.) defined by technical specifications of 3rd generation partnership project (3GPP). The plurality of communication nodes 110 to 130 may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like. Each of the plurality of communication nodes may have the following structure.

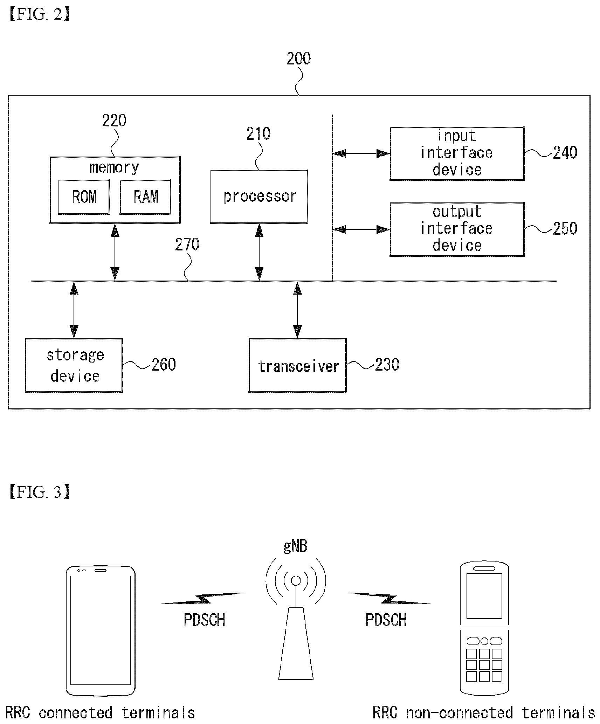

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. The respective components included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, an evolved Node-B (eNB), an advanced base station (BTS), a high reliability-base station (HR-BS), a base transceiver station (BTS), a radio base station, a radio transceiver, an access point, an access node, a radio access station (RAS), a mobile multi-hop relay base station (MMR-BS), a relay station (RS), an advanced relay station (ARS), a high reliability-relay station (HR-RS), a home NodeB (HNB), a home eNodeB (HeNB), a roadside unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, operation methods of a communication node in a communication system will be described. Even when a method (e.g., transmission or reception of a data packet) performed at a first communication node among communication nodes is described, the corresponding second communication node may perform a method (e.g., reception or transmission of the data packet) corresponding to the method performed at the first communication node. That is, when an operation of a terminal is described, the corresponding base station may perform an operation corresponding to the operation of the terminal. Conversely, when an operation of the base station is described, the corresponding terminal may perform an operation corresponding to the operation of the base station.

### Chapter 1: Introduction

In order to support service scenarios of enhanced Mobile BroadBand (eMBB), Ultra-Reliable and Low Latency Communication (URLLC), and Massive Machine Type Communication (mMTC), technical requirements are being studied in the 3GPP. The purpose of the eMBB service may be processing of large-capacity traffic, the purpose of the URLLC service may be reducing of an end-to-end latency and an error rate, and the purpose of the mMTC service may be processing of intermittent or periodic traffic in a geographic area with high UE density. One communication system may support one or more service scenarios simultaneously. For the service scenario(s), one communication system may be operated by variously adjusting configuration parameters (e.g., numerology) of an OFDM waveform. One numerology may be used in the LTE communication system, and one or more numerologies may be applied according to a situation in the NR communication system.

A time division duplex (TDD)-based communication system (hereinafter, referred to as a 'TDD system') may support both the eMBB service and the URLLC service. In this case, the low-latency performance of the URLLC service may be improved. Since uplink hybrid automatic repeat request-acknowledgement (UL HARQ-ACK) is required to support downlink (DL) traffic, a latency experienced by the DL traffic may be determined by a periodicity at which DL slots and UL slots repeatedly appear. Even in case of UL traffic, since a base station indicates a UL grant to a terminal in a DL slot, a latency experienced by the UL traffic may be determined by the periodicity at which DL slots and UL slots repeatedly appear. In the NR communication system, the type of slot may be dynamically changed to suit a situation. The terminal may identify DL symbol(s), UL symbol(s), or flexible (FL) symbol in units of symbols. The FL symbol may be re-indicated as a DL symbol or a UL symbol. In the LTE communication system, the type of subframe may be changed to suit a situation. The type of subframe may be a DL subframe, a UL subframe, or a special subframe. There is no concept of a FL subframe (or FL symbol) in the LTE communication system.

Among UL channels transmitted by the terminal, a physical uplink shared channel (PUSCH) and a physical uplink control channel (PUCCH) may be considered. A PUSCH may be dynamically scheduled. Alternatively, it may be indicated that a PUSCH is periodically transmitted. The periodic PUSCH transmission method may be classified into two schemes according to a periodic PUSCH transmission indication scheme. UL-downlink control information (UL-DCI) may be utilized to activate a semi-static PUSCH in the LTE communication system. Considering URLLC traffic in the NR communication system, in order to reduce dependence on an error rate of UL-DCI, periodic PUSCH transmission may be indicated only by higher layer signaling instead of UL-DCI.

In a communication system supporting multicast, a base station may transmit a PDSCH to one or more terminals. In an exemplary embodiment, a radio resource control (RRC) state of a terminal may be assumed to be an RRC connected state. When a point-to-point (PTP) scheme is used, the base station may transmit a UE-specific PDCCH scrambled with a UE-specific radio network temporary identifier (RNTI) (e.g., cell (C)-RNTI) to a terminal. The terminal may obtain the UE-specific PDCCH by using the UE-specific RNTI, and may receive a UE-specific PDSCH based on the UE-specific PDCCH. When a point-to-multipoint (PTM) scheme 1 is used, the base station may perform transmission for terminals belonging to one group. The base station may transmit a group-common PDCCH scrambled with using a group-common RNTI. Terminals may obtain the group-common PDCCH by using the group-common RNTI, and may receive a group-common PDSCH based on the group-common PDCCH. When a PTM scheme 2 is used, the base station may perform transmission for terminals belonging to one group. The base station may transmit a UE-specific PDCCH scrambled with a UE-specific RNTI (e.g., C-RNTI) to each of terminals. Each of the terminals may obtain the UE-specific PDCCH based on the UE-specific RNTI. The terminal may receive a group-common PDSCH based on a group-common RNTI. According to a technical specification, the PTM scheme 1 and/or the PTM scheme 2 may be configured or indicated to a terminal without a separate description.

Meanwhile, in order to provide a communication service in an unlicensed band, a communication node (e.g., base station or terminal) should use radio resources with fairness by using a sensing procedure (e.g., listen before talk (LBT) procedure or clear channel assessment (CCA) procedure). In this case, the sensing procedure may have different configuration parameters according to importance of data. The communication node (e.g., base station or terminal) may transmit a signal and/or a channel through the sensing procedure. In a special case (e.g., when a transmission operation is performed in a channel occupancy time (COT) secured by a base station and/or a terminal), a signal and/or a channel may be transmitted without the sensing procedure.

A beam-based sensing procedure in an unlicensed band may be classified into two types. For example, the sensing procedure may be classified into an omni-directional sensing procedure and a directional sensing procedure. In case that the omni-directional sensing procedure is applied, a base station may not perform a transmission operation even when an energy is detected in a direction that does not interfere with the terminal. This problem may be referred to as an 'exposed node problem'. In case that the directional sensing procedure is applied, a 'hidden node problem' may occur. In this case, even when an energy is not detected in the sensing procedure of the base station, transmission of the base station may interfere with other terminals (e.g., hidden nodes).

Uplink control information (UCI) may include a scheduling request (SR), channel state information (CSI), HARQ-acknowledgement (HARQ-ACK), and/or link recovery request (LRR). Each of SR, CSI, HARQ-ACK, and LRR included in UCI may be referred to as a control element. That is, UCI may include one or more control elements (e.g., SR, CSI, HARQ-ACK, and/or LRR). UCI may be used to manage downlink. Information (e.g., SR, CSI, HARQ-ACK, and/or LRR) included in UCI may vary according to a UCI type. UCI may be transmitted on a PUCCH and/or a PUSCH. When a PUCCH and a PUSCH overlap in one or more symbols, the UCI may be transmitted on the PUSCH instead of the PUCCH. In this case, the PUCCH may not be transmitted. When a frequency band (e.g., FR1) in which the PUCCH is transmitted is different from a frequency band (e.g., FR2) in which the PUSCH is transmitted, the PUSCH and the PUCCH may be transmitted simultaneously. When a PUCCH and a PUSCH overlap in one or more symbols, the terminal may compare a priority of the PUCCH with a priority of the PUSCH. A transmission having a lower priority among PUCCH transmission and PUSCH transmission may be dropped. The size of UCI may be expressed as a sum of the numbers of bits representing the UCI type. The size of UCI may be used to determine a PUCCH resource.

One UCI type may correspond to one PUCCH resource on a one-to-one basis. When PUCCH resources corresponding to different UCI types overlap in the time domain, the terminal may select an appropriate PUCCH resource set again based on a sum of sizes of the corresponding UCI types. In addition, the terminal may apply a PUCCH resource index indicated by DCI. When UCI types not scheduled by DCI are multiplexed, transmission resources of the multiplexed UCI types may be indicated by a PUCCH resource index configured by RRC signaling. This operation may mean that multiplexed UCI types are periodically transmitted. The base station may indicate (e.g., configure) to the terminal 'multiplexing of the UCI types' and/or 'PUCCH resource for transmission of the UCI type(s)' through RRC signaling. In exemplary embodiments, the RRC signaling may mean an RRC message.

The PUCCH resource may be determined as follows. The base station may transmit *PUCCH-configCommon* and/or *PUCCH-config* to the terminal through RRC signaling (e.g., system information block (SIB)1 transmission or dedicated signaling). The PUCCH resource set(s) for the terminal may be indicated by *PUCCH-configCommon* and/or *PUCCH-config.* The terminal may select one PUCCH resource set from among the PUCCH resource sets indicated by the base station according to the UCI size. The PUCCH resource set may include a plurality of PUCCH resources. Each of the plurality of PUCCH resources may be indicated by a PUCCH resource index. The base station may inform the terminal of the PUCCH resource index through DCI or RRC signaling. The terminal may identify a PUCCH resource indicated by the PUCCH resource index received from the base station among the plurality of PUCCH resources.

Configured grant (CG)-UCI may be used for CG PUSCH transmission in an unlicensed band. The CG-UCI may include transport block (TB) information and/or channel occupancy time (COT) information. The TB information may include a HARQ process number, a redundancy version (RV), and/or a new data indicator (NDI). The COT information may include COT sharing information. The CG-UCI may be transmitted on a PUSCH.

The terminal may transmit UCI and/or CG-UCI. A priority of the UCI may be different from that of the CG-UCI. The UCI and/or CG-UCI may be used for TB transmission. Therefore, a priority of the TB may be considered as 'the priority of the UCI' or 'the priority of the CG-UCI'. In a procedure of allocating a PUSCH resource, a PDSCH resource, or a physical sidelink shared channel (PSSCH) resource by DCI and/or RRC signaling, the priority of the TB may be set, and the priority of the TB may be used as the priority of the UCI or the priority of the CG-UCI. A periodic CSI and/or a semi-persistent CSI may have a low priority. A priority of the SR and a priority of the LRR may be set by RRC signaling. A priority of a HARQ-ACK for a PSSCH may be set to be the same as the priority of the TB. A case where the priority of HARQ-ACK exceeds a priority threshold indicated by RRC signaling may be distinguished from a case where the priority of HARQ-ACK does not exceed the priority threshold indicated by RRC signaling. Exceptionally, the priority of the HARQ-ACK for the PSSCH may not correspond to the priority of the TB on a one-to-one basis. In this case, the priority of the TB may be derived from the priority of the HARQ-ACK for the PSSCH. In exemplary embodiments, a 'HARQ-ACK' may mean a HARQ-ACK bit, HARQ-ACK information, a HARQ-ACK feedback, or a HARQ-ACK response.

UCI and CG-UCI having different priorities may not be multiplexed. In this case, the terminal may transmit one piece of control information (e.g., high priority (HP) UCI or HP CG-UCI) having a higher priority among the UCI and CG-UCI. Alternatively, the terminal may transmit one piece of control information (e.g., low priority (LP) UCI or LP CG-UCI) having a lower priority among the UCI and CG-UCI. The terminal may assume that HP UCI types are multiplexed, and may generate a HP PUCCH (e.g., virtual HP PUCCH) based on the assumption. The terminal may assume that LP UCI types are multiplexed, and may generate an LP PUCCH (e.g., virtual LP PUCCH) based on the assumption. When the HP PUCCH overlaps the LP PUCCH in the time domain, the terminal may transmit the HP PUCCH including the HP UCI type(s). Therefore, only UCI types having the same priority may be multiplexed. Alternatively, one UCI type among the UCI types may be dropped as needed. The base station may predict the UCI type dropped at the terminal. Accordingly, the base station may instruct the terminal to transmit the dropped UCI type (e.g., UCI or CG-UCI) by performing a scheduling operation for the dropped UCI type.

The serving base station may transmit, to a terminal, a PDCCH including scheduling information (e.g., DCI) of a PDSCH including multicast data. The terminal may receive the PDCCH using a separate radio identifier (e.g., separate RNTI) and may decode the DCI included in the PDCCH. In exemplary embodiments, the radio identifier for multicast may be referred to as a multicast (M)-RNTI, G-RNTI, GS-RNTI, G-CS-RNTI, or MCCH-RNTI. In exemplary embodiments, broadcast transmission and multicast transmission may be described without distinction from each other. Methods for multicast transmission may be applied for broadcast transmission, and methods for broadcast transmission may be applied for multicast transmission.

A terminal that has established an RRC connection with a base station may be referred to as an 'RRC connected terminal'. A terminal that has not establish an RRC connection with a base station may be referred to as an 'RRC non-connected terminal', 'RRC inactive terminal', or 'RRC idle terminal'. A plurality of RRC connected terminals may belong to one group (e.g., multicast group). The RRC connected terminals belonging to one group may receive the same multicast data. A plurality of RRC non-connected terminals may belong to one group (e.g., multicast group). The RRC non-connected terminals belonging to one group may receive the same multicast data. In exemplary embodiments, a group may mean a multicast group or a multicast identifier. The multicast identifiers may be used to distinguish different multicast PDSCHs.

FIG. 3 is a conceptual diagram illustrating a first exemplary embodiment of a multicast transmission method.

Referring to FIG. 3, a base station (e.g., gNB) may support multicast transmission (e.g., multicast service) not only for RRC connected terminals but also for RRC non-connected terminals. Group(s) including one or more terminals may be configured, and terminals belonging to each group may receive the same data. The RRC connected terminal(s) and the RRC non-connected terminal(s) may receive the same broadcast PDSCH. The RRC connected terminal belonging to one group may receive a multicast PDSCH. The terminal may receive one or more multicast PDSCHs. The terminal may receive one or more broadcast PDSCHs.

### Chapter 2: Priority of multicast reception

### 2.1 Multicast PDSCH reception method

The base station may allocate a PDSCH to each terminal. In addition, the base station may allocate a PDSCH (e.g., common PDSCH, multicast PDSCH) to terminals belonging to one group. That is, the base station may allocate a PDSCH to each group. Each of a BWP and a PDSCH may be appropriately configured and/or allocated so that all terminals belonging to a group receive the PDSCH. In order to support the above-described operation, the base station should perform a complex scheduling operation. In this case, when a unicast PDSCH is previously allocated to a specific terminal, the multicast PDSCH should be allocated in a resource other than a resource to which the unicast PDSCH is allocated. That is, resource allocation of the multicast PDSCH may be delayed. The multicast PDSCH may be a common PDSCH transmitted to terminals (e.g., all terminals) belonging to the group. When a multicast PDSCH is previously allocated to a specific group, a unicast PDSCH should be allocated in a resource other than a resource to which the multicast PDSCH is allocated. That is, resource allocation of the unicast PDSCH may be delayed. The maximum number of PDSCHs that the terminal can process in the same slot or the same subslot may be defined as 'UE capability'. In exemplary embodiments, the UE capability may be referred to as processing capability.

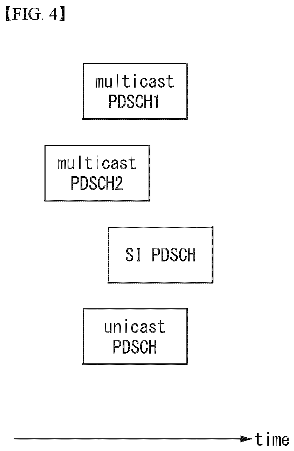

FIG. 4 is a conceptual diagram illustrating a first exemplary embodiment of a PDSCH allocation method.

Referring to FIG. 4, the base station may allocate four PDSCHs to one terminal. The four PDSCHs may include multicast PDSCHs, a unicast PDSCH, and/or a system information (SI) PDSCH. The multicast PDSCH may be a PDSCH including multicast data. The unicast PDSCH may be a PDSCH including unicast data. The SI PDSCH may be a PDSCH including system information. When reception and decoding of one or more PDSCHs is possible according to the UE capability, the terminal may decode some or all PDSCHs in one slot or one subslot.

**Method 2.1-1:** The base station may perform scheduling such that PDSCHs more than the UE capability (e.g., processing capability) are allocated. The terminal may select PDSCH(s) that the terminal can process in consideration of priorities among PDSCHs allocated by the base station.

In order to select some PDSCHs, priorities may be considered in configuration of PDSCHs. The priority of the PDSCH may be defined based on the RNTI. Alternatively, the priority of the PDSCH may be explicitly indicated.

**Method 2.1-2:** The priority for processing the PDSCH may follow the priority of the PDSCH or the RNTI scrambling DCI.

When an M-RNTI is used, its priority compared with those of other RNTIs may be considered. For example, MsgB-RNTI, TC-RNTI, RA-RNTI, etc. may be considered in an initial access procedure or a random access procedure. For example, a C-RNTI may be considered. Among RNTIs, the M-RNTI may have the lowest priority. In the random access procedure, when a PDSCH for the random access procedure and a multicast PDSCH overlap (e.g., partially overlap) in the time domain, the terminal may not receive the multicast PDSCH according to processing capability.

**Method 2.1-3:** In Method 2.1-2, an M-RNTI may have the lowest priority among the RNTIs.

In the multicast PDSCH allocation procedure, a priority (e.g., priority of a multicast PDSCH) may be introduced. The base station may indicate to the terminal the priority of the corresponding PDSCH in the PDSCH allocation or configuration procedure. For example, an RRC message for configuring a multicast PDSCH 1 may include a priority of the multicast PDSCH 1. As another example, DCI for allocating a multicast PDSCH 2 may include a priority of the multicast PDSCH 2. The value of the priority may be a natural number. Priorities between PDSCHs may be determined according to a comparison result between the corresponding priority and a preset threshold. A priority when the priority value falls within the preset threshold may be different from a priority when the priority value deviates from the preset threshold. The preset threshold may be determined in a technical specification. Alternatively, the preset threshold may be given by RRC signaling.

**Method 2.1-4:** A priority for processing a multicast PDSCH processing may be known to the terminal in advance. The terminal may process a multicast PDSCH before a unicast PDSCH based on the priority. Alternatively, the terminal may process a unicast PDSCH before a multicast PDSCH based on the priority.

**Method 2.1-5:** The terminal may determine a priority for processing a multicast PDSCH based on a preset threshold. The terminal may process a multicast PDSCH before a unicast PDSCH based on a priority according to the preset threshold. Alternatively, the terminal may process a unicast PDSCH before a multicast PDSCH based on a priority according to the preset threshold.

The above-described operation may be utilized for comparison of a multicast PDSCH and a unicast PDSCH. When the priority (e.g., priority of the multicast PDSCH) is out of the preset threshold, the terminal may regard the priority of the multicast PDSCH as the same as a priority of a unicast PDSCH for URLLC traffic. If the priority (e.g., priority of the multicast PDSCH) falls within the preset threshold, the terminal may regard the priority of the multicast PDSCH as the same as a priority of a unicast PDSCH for eMBB traffic.

The priority of the multicast PDSCH may be directly compared with the priority of the unicast PDSCH. In this case, the priority of the multicast PDSCH may be limited to two values. In this case, the priority of the multicast PDSCH may be utilized not only as a priority for decoding the PDSCH but also as a priority for transmitting a HARQ-ACK therefor.

**Method 2.1-6:** The priority of the multicast PDSCH may be limited to two values, and may be directly compared with the priority of the unicast PDSCH.

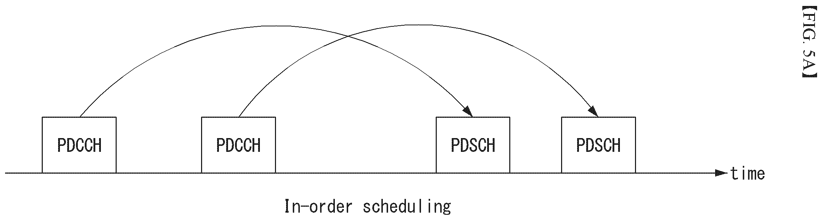

When a plurality of multicast PDSCHs are allocated, the terminal may compare priorities of the plurality of multicast PDSCHs, and may select a multicast PDSCH to be decoded according to processing capability. When a plurality of PDSCHs are allocated to the terminal, the plurality of PDSCHs may be allocated in chronological order. As in exemplary embodiment shown in FIGS. 5A to 6B below, a temporal order of 'PDCCH - PDSCH - PUCCH' may be maintained.

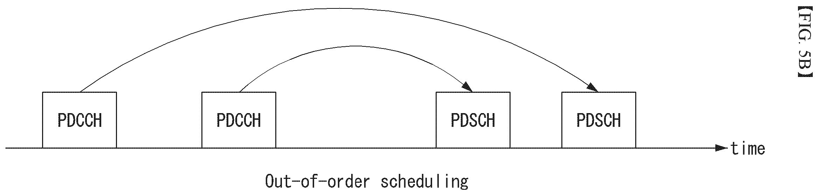

FIG. 5A is a conceptual diagram illustrating a second exemplary embodiment of a PDSCH allocation method, and FIG. 5B is a conceptual diagram illustrating a third exemplary embodiment of a PDSCH allocation method.

Referring to FIGS. 5A and 5B, the order of the PDCCH and the order of the PDSCH may be maintained in in-order scheduling, and the order of the PDCCH and the order of the PDSCH may be different from each other in out-of-order scheduling.

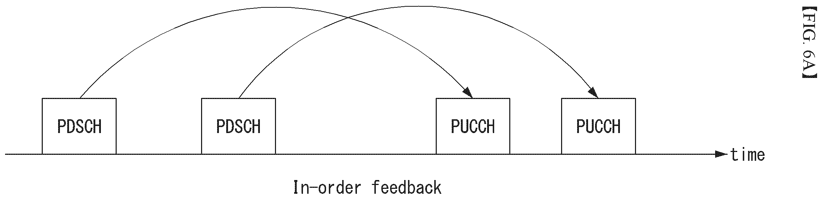

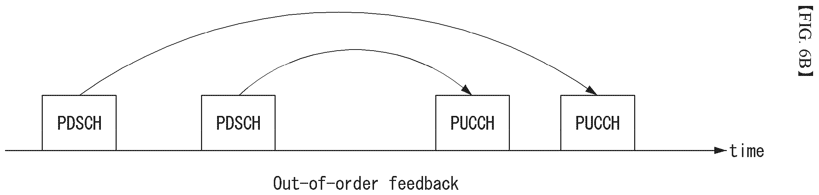

FIG. 6A is a conceptual diagram illustrating a first exemplary embodiment of a PUCCH allocation method, and FIG. 6B is a conceptual diagram illustrating a second exemplary embodiment of a PUCCH allocation method.

Referring to FIGS. 6A and 6B, the order of the PDSCH and the order of the PUCCH may be maintained in in-order feedback, and the order of the PDSCH and the order of the PUCCH may be different from each other in out-of-order feedback. The order of 'PDCCH - PDSCH - PUCCH' may be maintained in the in-order scheduling and the in-order feedback. A time interval (e.g., slot offset or subslot offset) between the PDCCH and the PDSCH may be defined as K0, and a time interval (e.g., slot offset or subslot offset) between the PDSCH and the PUCCH may be defined as K1. Accordingly, (K0, K1) may satisfy the condition of in-order scheduling/feedback (e.g., in-order scheduling and/or in-order feedback).

Some terminals belonging to a group may operate in a power saving mode. In this case, the base station may set K0 between the PDCCH and the PDSCH to be larger than a preset threshold, and may inform the terminal of K0. Since K0 may be large in a procedure for dynamically allocating a multicast PDSCH, the out-of-order scheduling may occur frequently.

Considering multicast transmission, it may be difficult to satisfy in-order scheduling/feedback for all terminals belonging to the group. Therefore, scheduling/feedback (e.g., out-of-order scheduling/feedback) other than in-order scheduling/feedback may occur in the terminal. The out-of-order scheduling/feedback may mean out-of-order scheduling and/or out-of-order feedback. In this case, the terminal may process scheduling for a PDSCH having a high priority. The base station may separately provide a priority for the above-described operation to the terminal.

When a PDSCH is allocated by a PDCCH, a specific field of DCI may indicate a priority of the PDSCH. The base station may indicate to the terminal a priority of a PDSCH allocated by RRC signaling or a PDSCH activated by DCI. The above-mentioned priority may be applied to a processing order of a multicast PDSCH. A priority of a unicast PDSCH and a priority of a multicast PDSCH may have different values. When the priority of the multicast PDSCH is out of a preset threshold or the priority of the multicast PDSCH falls within the preset threshold, the priority of the multicast PDSCH may be compared with the priority of the unicast PDSCH.

**Method 2.1-7:** In high-priority multicast transmission, out-of-order scheduling/feedback for low-priority multicast may be allowed. In this case, the terminal may receive a PDSCH and may transmit a PUCCH when HARQ-ACK feedback is enabled.

### 2.2 Multicast PDCCH reception method

In order to receive a PDCCH, the terminal may demodulate control channel elements (CCEs) and configure a PDCCH candidate to decode DCI. Since the processing capability of the terminal has a limit, the maximum number of CCEs and/or the maximum number of PDCCHs that the terminal can process within one slot or one subslot may be defined in a technical specification. The reason why the maximum number of CCEs and/or the maximum number of PDCCHs is limited is that the terminal needs to perform a channel estimation operation for receiving the CCEs and a polar code decoding operation for receiving the PDCCH.

When a serving cell is a SCell, the base station may properly configure search space(s) to the terminal so as not to exceed the maximum number of CCEs and/or the maximum number of PDCCHs. When the serving cell is a PCell, the base station may configure search space(s) to the terminal so as to exceed the maximum number of CCEs and/or the maximum number of PDCCHs. In this case, the terminal may not search some search space(s) according to a preconfigured procedure. In this case, the number of CCEs processed by the terminal may be less than or equal to the maximum number of CCEs, and the number of PDCCHs processed by the terminal may be less than or equal to the maximum number of PDCCHs. Here, only UE-specific search space(s) may be supported in the SCell. Alternatively, common search space(s) as well as UE-specific search space(s) may be supported in the SCell according to configuration.

The above-mentioned constraint may be a constraint on a unicast PDCCH. Therefore, it is necessary to improve the above-mentioned constraint in a scenario in which multicast transmission is further considered. There is a need for a method capable of supporting both unicast transmission and multicast transmission while satisfying the constraints of the maximum number of PDCCHs and/or the maximum number of CCEs in each of the PCell and the SCell.

A search space for multicast (e.g., search space set capable of observing M-RNTI) may belong to a group common search space. Alternatively, the search space for multicast may belong to a UE-specific search space (USS). For example, the search space for multicast may belong to a Type3-PDCCH CSS set or a CSS set having a separate type. Method 2.2-1 may be applied to both SCell and PCell.

**Method 2.2-1:** M-RNTI may be observed in a Type3-PDCCH CSS set and/or a USS set.

A control resource set (CORESET) and a search space may be configured in the same carrier so that all terminals belonging to a group monitor the search space using an M-RNTI. Accordingly, a first terminal may interpret the corresponding carrier as a PCell, and a second terminal may interpret the carrier as a SCell.

A separate CSS set may be configured in the terminal as the search space for multicast. Even in this case, the terminal may monitor the search space by using the M-RNTI.

The number of CCEs and the number of PDCCHs processed by terminals observing an M-RNTI in the SCell may not exceed the maximum number, respectively. Accordingly, the base station may properly configure the search space set to the terminal(s). However, when a large number of terminals exist, it may be difficult to properly configure the search space(s) (or, search space set). Therefore, even in the SCell, a method for the terminal to select some search space(s) is required.

**Method 2.2-2:** The operation of selecting some search space sets in order to limit the number of CCEs and/or PDCCHs (e.g., the number of receptions) may be applied not only to a PCell but also to a SCell.

Specifically, the number of PDCCHs and the number of CCEs may be summed in the order of IDs of the search space sets, and the number of CCEs and the number of PDCCHs that the terminal should receive in the CSS set and the USS set may be set so as not to be greater than the maximum number. A configuration parameter (e.g., *monitoringCapabilityConfig*) configured in the PCell may be indicated to the terminal as another RRC configuration parameter in the SCell. If a CORESETPoolIndex is indicated to the terminal, the configuration parameter (e.g., *monitoringCapabilityConfig*) set to the terminal may be applied only to a first CORESET. Alternatively, a separate RRC configuration parameter indicating the first CORESET or a second CORESET may be indicated to the terminal.

**Method 2.2-3:** *monitoringCapabilityConfig* may also be configured for a SCell.

**Method 2.2-4:** An RRC configuration parameter for selecting a first CORESET or a second CORESET in a PCell or SCell to which *monitoringCapabilityConfig* is applied may be introduced.

An operation in which the terminal receives only a part of the search space set may be performed according to indication of the base station. The operation in which the terminal receives only a part of the search space set may be performed only when multicast is supported.

**Method 2.2-5:** In Method 2.2-2, if an M-RNTI is configured to the terminal even when there is no separate RRC signaling of the base station, the terminal may perform an operation of selecting a search space set.

**Method 2.2-6:** In Method 2.2-2, the operation of selecting a search space set in a SCell may be enabled by RRC signaling.

The number of CCEs and/or PDCCHs received by the terminal observing an M-RNTI in the SCell may exceed the maximum number supported by the terminal. Accordingly, the operation of not receiving a part of the search space set may be enabled or disabled. The base station may indicate to the terminal enabling or disabling of the operation of not receiving a part of the search space set by using RRC signaling. If the operation of not receiving a part of the search space set is enabled, the terminal may perform an operation of selecting a USS set in all PDCCH monitoring occasions (MOs). If disabling of the operation of not receiving a part of the search space set is indicated to the terminal, the terminal may expect that the number of CCEs and/or PDCCHs in all search space sets is not greater than the maximum number.

**Method 2.2-7:** In Method 2.2-6, an operation of selecting a search space set in a SCell may be performed in all PDCCH MOs.

Since the number of CCEs and/or PDCCHs in a PDCCH MO in which the M-RNTI is not received is expected not to exceed the maximum number supported by the terminal, an operation of counting the number of valid search space sets does not always need to be performed. In this case, the terminal may perform the operation of selecting the search space set only in time resources for observing the M-RNTI.

**Method 2.2-8:** In Method 2.2-6, an operation of selecting a search space set in a SCell may be performed only in a time (e.g., slot) when an M-RNTI is observed.

The DCI formats decoded by the terminal may be set to be plural. For example, two DCI formats may be configured, and the two DCI formats may be scrambled by the M-RNTI. The lengths of the two DCI formats may be different from each other. A size of a first DCI format among the two DCI formats may be the same as the size of DCI format 1_0. A size of a second DCI format among the two DCI formats may be the same as the size of DCI format 1_1. Here, the size of DCI format 1_0 may mean the size of DCI format 1_0 scrambled by a C-RNTI received in a CSS set.

### Chapter 3: Multicast PUCCH transmission method

When one multicast is configured to a terminal, a base station may transmit a multicast PDSCH to the terminal, and the terminal may perform decoding of the multicast PDSCH to derive a HARQ-ACK. The terminal may transmit a PUCCH including the derived HARQ-ACK to the base station. The HARQ-ACK feedback may be enabled or disabled according to indication of the base station. A method of transmitting a PUCCH when the HARQ-ACK feedback is enabled will be described.

A PDCCH for multicast may include PUCCH resource information. A PUCCH resource set may be identically configured to terminals belonging to the same group (e.g., the same multicast group). Alternatively, the PUCCH resource set may be independently configured for each terminal. Even when the same UL BWP and the same PUCCH resource index are configured and the first CCE of the PDCCH in which the M-RNTI is detected is the same, if the PUCCH resource sets configured to the terminals are different, PUCCH resources indicated by the PDCCH may be interpreted as different PUCCH resources.

**Method 3-1:** A PUCCH resource set in which a HARQ-ACK for a multicast PDSCH is transmitted may be equally indicated to terminals belonging to a group.

In order to indicate the same PUCCH resource set, a PUCCH resource set indicated by *PUCCH-configcommon* may be used. The terminal may obtain allocation information of a multicast PDSCH through DCI scrambled with an M-RNTI or DCI scrambled with a C-RNTI. In this case, the PUCCH resource set may be interpreted based on *PUCCH-configcommon* regardless of the RNTI. The terminal may transmit one or two HARQ-ACK bit(s) to the base station.

When PUCCH timings for a plurality of multicast PDSCHs are indicated differently, the terminal may transmit one PUCCH including HARQ-ACK bits for the plurality of multicast PDSCHs to the base station. In this case, the terminal may identify a PUCCH resource based on a later PDCCH (i.e., the PDCCH received later) among PDCCHs. The base station may know that two HARQ-ACK bits are to be transmitted for the later PDCCH. Accordingly, the base station may allocate the PUCCH resource in consideration of the two HARQ-ACK bits.

The terminal may transmit HARQ-ACK bits for three or more multicast PDSCHs on the same PUCCH. For example, when a small amount of UL resources are configured and a multicast PDSCH is periodically transmitted in a communication system supporting TDD, HARQ-ACK bits for a plurality of multicast PDSCHs may correspond to one PUCCH.

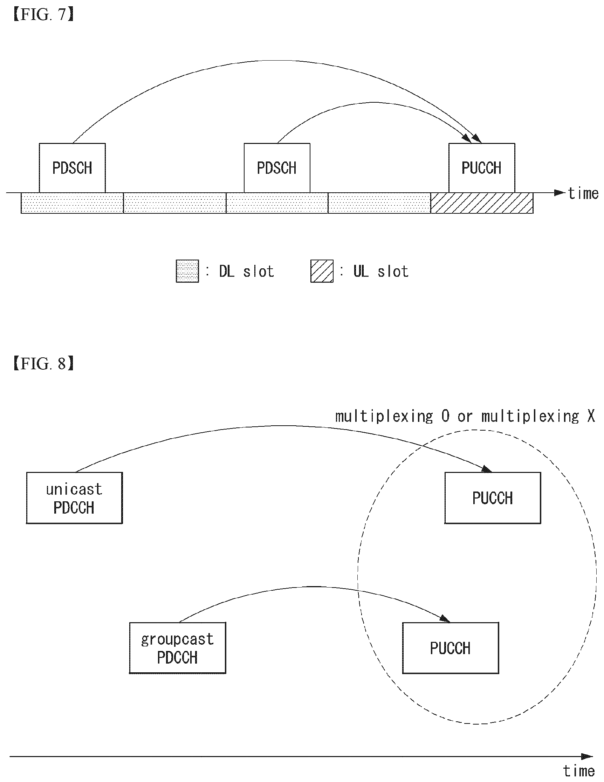

FIG. 7 is a conceptual diagram illustrating a first exemplary embodiment of a PUCCH transmission timing.

Referring to FIG. 7, two PDSCHs (e.g., two multicast PDSCHs) may correspond to one PUCCH. When a large number of resources (e.g., a wide bandwidth and/or a large number of symbols) cannot be allocated for multicast transmission, a base station may schedule a plurality of PDSCHs so as to correspond to one PUCCH.

In this case, a terminal may reduce the size of HARQ-ACK bits. For example, the terminal may maintain the size of HARQ-ACK bits to 2 bits or less. Alternatively, the base station may allocate a PUCCH resource capable of transmitting three or more HARQ-ACK bits. When a PUCCH resource set is configured by *PUCCH-configcommon,* only two or less HARQ-ACK bits may be transmitted. In order to support the above-described operation, Methods 3-2 and 3-3 below may be considered.

**Method 3-2:** The terminal may expect not to transmit three or more HARQ-ACK bits.

**Method 3-3:** The terminal may express three or more HARQ-ACK bits as one HARQ-ACK bit by performing an AND bundling operation on three or more HARQ-ACK bits, and may transmit the one HARQ-ACK on a PUCCH.

In order to consider two or less HARQ-ACK bits, the AND bundling may be performed. In this case, according to lossy compression, the base station may perform many retransmission procedures. To solve this problem, only two multicast PDSCHs may be selected. The terminal may select two multicast PDSCHs from among three or more multicast PDSCHs based on reception times of the multicast PDSCHs.

**Method 3-4:** The terminal may select two multicast PDSCHs earlier or two multicast PDSCHs later in the time domain from among three or more multicast PDSCHs, and may transmit only HARQ-ACK bits for the selected two multicast PDSCHs. That is, the terminal may expect that the above-described operation is supported.

When three or more HARQ-ACK bits for multicast PDSCHs are multiplexable, the base station may indicate a new PUCCH resource set to the terminal. The new PUCCH resource set may be configured independently (e.g., differently) for each terminal. This operation may be Methods 3-5. Alternatively, the new PUCCH resource set may be identically configured for all terminals belonging to the same group. This operation may be Methods 3-6.

**Method 3-5:** A PUCCH resource set for supporting unicast (hereinafter referred to as a 'unicast PUCCH resource set') may be reused as a PUCCH resource set for supporting multicast (hereinafter referred to as a 'multicast PUCCH resource set').

When three or more HARQ-ACK bits for multicast PDSCHs are generated, the terminal may multiplex the three or more HARQ-ACK bits by using the PUCCH resource set configured by the base station. This operation may mean "each of all terminals belonging to a group transmit HARQ-ACKs to the base station by using a separate PUCCH resource". In multicast transmission, three or more HARQ-ACK bits may not occur frequently. Therefore, the PUCCH resource set may not be configured to be shared by the group. Accordingly, the terminal may utilize a unicast PUCCH resource set for transmission of HARQ-ACK(s) for multicast PDSCH(s).

In order to use a unicast PUCCH resource set, the terminal may need to establish an RRC connection with the base station and receive *PUCCH-config* from the base station. Since the PUCCH resource set supporting transmission of three or more HARQ-ACK bits is not configured for all terminals, multicast support may have limitations. To solve this problem, a separate PUCCH resource set for multicast may be indicated to terminals. For example, the PUCCH resource set may be included in RRC configuration parameter(s) for configuring multicast transmission to the terminal.

**Method 3-6:** The base station may indicate to the terminals a PUCCH resource set for supporting multicast transmission by using RRC signaling.

In multicast transmission, the PUCCH resource set may be used differently according to a priority (e.g., priority of multicast PDSCH). In this case, two multicast PUCCH resource sets may be configured for the terminal.

One or more HARQ-ACK bits may be generated according to the number of multicast PDSCHs. A common PUCCH resource set to support this operation may be indicated to the terminal(s). Since the PUCCH resource set supports transmission of n HARQ-ACK bits, not only PUCCH formats 0 and 1 but also PUCCH formats 2, 3, and 4 may be used. n may be a natural number.

It may be indicated by RRC signaling that the terminal performs a NACK-only feedback operation. In this case, the PUCCH format 0 or 1 may be used, and a separate PUCCH resource set other than the unicast PUCCH resource set may be used as a multicast PUCCH resource set. Here, the separate PUCCH resource set may be one of a plurality of multicast PUCCH resource sets configured to the terminal.

### 3.1 Method of indicating HARQ-ACK multiplexing for multicasts having different priorities

A case in which two or more multicast transmissions are configured to the terminal may be considered. When one multicast is configured to the terminal, the priority may always be maintained the same. Two or more multicast transmissions may have different priorities. Also, the base station may indicate different PUCCH timings for two or more multicast transmissions. When PUCCHs indicated for different multicast transmissions overlap in the time domain (e.g., in some symbols), the terminal may transmit HARQ-ACKs on one PUCCH. For example, the terminal may transmit only HARQ-ACK for the multicast PDSCH for one priority. Alternatively, the terminal may multiplex HARQ-ACK bits for multicast PDSCHs for different priorities on one PUCCH. Such the operation may be indicated by a combination of RRC signaling and DCI.

**Method 3.1-1:** The base station may instruct the terminal to perform the operation of multiplexing HARQ-ACK bits for multicast PDSCHs having different priorities through RRC signaling.

**Method 3.1-2:** The latest DCI or DCI for allocating a multicast PDSCH having the highest priority may include information instructing to perform the operation of multiplexing HARQ-ACK bits for multicast PDSCHs having different priorities or information instructing to perform the operation of selecting one multicast PDSCH without multiplexing HARQ-ACK bits.

**Method 3.1-3:** Allowance of the operation of multiplexing HARQ-ACK bits for multicast PDSCHs having different priorities may be indicated by RRC signaling, and the latest DCI or DCI allocating a multicast PDSCH having the highest priority DCI may indicate multiplexing of HARQ-ACK bits or selection of one multicast PDSCH.

According to priorities of the multicast PDSCHs, a PUCCH for only one multicast PDSCH may be transmitted. In this case, a PUCCH resource may be indicated by DCI for allocating the one multicast PDSCH.

In the PTM scheme 1, DCI scrambled by an M-RNTI may not individually indicate the size of HARQ-ACK bits of each terminal belonging to a group. When PUCCHs respectively allocated for multicast PDSCHs overlap in the time domain (e.g., in some symbols), it may be preferable that HARQ-ACK bit(s) for one multicast PDSCH (e.g., multicast PDSCH having the highest priority) are fed back to the base station.

In the PTM scheme 2, since DCI scrambled with a C-RNTI is received by each terminal, there is no restriction of the PTM scheme 1 described above. Accordingly, the terminal may feedback HARQ-ACK bits for all multicast PDSCHs to the base station. Here, the PUCCH resource may be indicated by the DCI last received from the terminal.

### 3.2 Method of enabling and disabling HARQ-ACK feedback for a multicast PDSCH

The terminal may not always report a HARQ-ACK for a multicast PDSCH to the base station. When ACKs for a transport block (TB) are received from all terminals belonging to a group, the base station may consider that the TB has been transmitted without error. When a NACK for the TB is received from at least one terminal belonging to the group, the base station may retransmit the TB. In order to prevent the base station from configuring a large number of PUCCH resources, a NACK-only feedback operation may be used.

When a radio link quality between a first terminal and the base station is good, a probability of ACK occurrence in the first terminal may be expected to be high, and when a radio link quality between a second terminal and the base station is bad, a probability of NACK occurrence in the second terminal may be expected to be high. In this case, terminals belonging to an edge region may not support the NACK-only feedback operation. That is, the terminals belonging to an edge region may report ACK or NACK to the base station. In order to support the above-described operation, HARQ-ACK feedback for a multicast PDSCH may be enabled or disabled. In an exemplary embodiment, enabling of HARQ-ACK feedback may mean enabling of HARQ-ACK feedback, and disabling of HARQ-ACK feedback may mean disabling of HARQ-ACK feedback.

**Method 3.2-1:** DCI for scheduling a multicast PDSCH may include information indicating enabling or disabling of HARQ-ACK feedback.

**Method 3.2-2:** Allowing disabling of HARQ-ACK feedback may be indicated by RRC signaling, and DCI scheduling a multicast PDSCH may indicate enabling or disabling of HARQ-ACK feedback.

**Method 3.2-3:** An RRC signaling configuring multicast transmission may indicate enabling or disabling of HARQ-ACK feedback.

According to an example in Method 3.2-2, if HARQ-ACK feedback for a multicast PDSCH is enabled by RRC signaling, the terminal may always feedback a HARQ-ACK for the multicast PDSCH. In this case, even when a specific field or a combination of fields included in DCI for allocating the multicast PDSCH indicates disabling of HARQ-ACK feedback, the terminal may ignore the disabling indication of HARQ-ACK feedback, and may transmit a HARQ-ACK for the multicast PDSCH to the base station. That is, the indication by RRC signaling may take precedence over the indication by DCI. If the disabling of HARQ-ACK feedback for a multicast PDSCH is allowed by RRC signaling, the terminal may or may not transmit the HARQ-ACK according to a specific field or a combination of fields of the DCI for allocating the multicast PDSCH.

According to another example of Method 3.2-2, when HARQ-ACK feedback for a multicast PDSCH is enabled by RRC signaling, the terminal may or may not feedback a HARQ-ACK according to DCI allocating the multicast PDSCH. This case may be a case in which a specific field or a combination of fields included in the DCI for allocating the multicast PDSCH indicates disabling of HARQ-ACK feedback. That is, the HARQ-ACK feedback may be performed by combining the RRC signaling and the DCI indication. When the disabling of HARQ-ACK feedback for the multicast PDSCH is allowed by RRC signaling, the terminal may or may not transmit the HARQ-ACK according to a specific field or a combination of fields of the DCI for allocating the multicast PDSCH.

**Method 3.2-4:** In Method 3.2-2, if enabling of HARQ-ACK feedback is indicated by RRC signaling, when DCI for allocating a multicast PDSCH includes information indicating enabling or disabling of the HARQ-ACK feedback, the terminal may transmit the HARQ-ACK to the base station according to the indication of the DCI (i.e., indication for enabling or disabling of the HARQ-ACK feedback).

**Method 3.2-5:** DCI for allocating a multicast PDSCH may include a specific field, the specific field set to a first value (e.g., 0) may indicate enabling of HARQ-ACK feedback, and the specific field set to a second value (e.g., 1) may indicate disabling of HARQ-ACK feedback.

Alternatively, a combination of fields included in DCI for allocating a multicast PDSCH may indicate enabling or disabling of HARQ-ACK feedback. For example, a specific value of a combination of a first field indicating a HARQ-ACK feedback timing and a second field indicating a PUCCH resource index, which are included in the DCI, may indicate enabling or disabling of HARQ-ACK feedback. The above-described specific value of the combination may be predefined in a technical specification. Alternatively, the base station may inform the terminal of the above-described specific value of the combination.

Meanwhile, when the HARQ-ACK feedback is disabled, a HARQ codebook may be generated as follows. When the base station instructs the terminal to generate a Type1 (T1) HARQ codebook and HARQ-ACK feedback is disabled, the terminal may generate a T1 HARQ codebook including a NACK for a multicast PDSCH. The generation of the T1 HARQ codebook may be indicated by RRC signaling, and disabling of the HARQ-ACK feedback may be indicated by DCI. When the base station instructs the terminal to generate a Type2 (T2) HARQ codebook and HARQ-ACK feedback is disabled, a T2 HARQ codebook generated by the terminal may not include a HARQ-ACK for a multicast PDSCH. The generation of the T2 HARQ codebook may be indicated by RRC signaling, and disabling of the HARQ-ACK feedback may be indicated by DCI. A value of a downlink assignment index (DAI) included in the DCI for allocating the multicast PDSCH may satisfy a specific condition. For example, a counter (C)-DAI and a total (T)-DAI may be the same as previous values.

Alternatively, even when HARQ-ACK feedback is disabled by DCI, if another HARQ-ACK bit is generated in addition to a HARQ-ACK bit for a multicast PDSCH scheduled by the DCI, the terminal may generate the HARQ-ACK bit for the multicast PDSCH. Here, when the HARQ-ACK bit for the multicast PDSCH is multiplexable with other HARQ-ACK bit(s), the terminal may generate the HARQ-ACK bit for the multicast PDSCH. The other HARQ-ACK bit(s) may be a HARQ-ACK bit for a unicast PDSCH or a HARQ-ACK bit for another multicast PDSCH. The terminal may generate multiplexed HARQ-ACK bits (e.g., HARQ sub-codebook or HARQ codebook) by multiplexing the HARQ-ACK bit for the multicast PDSCH and other HARQ-ACK bit(s), and may transmit the multiplexed HARQ-ACK bits on an uplink channel (e.g., PUCCH or PUSCH). That is, the HARQ-ACK bit for the multicast PDSCH and other HARQ-ACK bit(s) may be transmitted on the same PUCCH.

### 3.2.1 HARQ-ACK feedback method

The terminal may transmit a PUCCH including a HARQ-ACK for a multicast PDSCH to the base station. The terminal may transmit only NACK, not ACK, to the base station according to configuration of the base station. Specifically, only when a decoding result of the multicast PDSCH is NACK, the terminal may transmit NACK to the base station on the PUCCH. When the decoding result of the multicast PDSCH is ACK or when DCI for allocating the multicast PDSCH is not received (e.g., when DTX occurs), the terminal may transmit the corresponding response (e.g., ACK or DTX) to the base station. Therefore, the base station may not receive the PUCCH from the terminal.

The terminal may generate a HARQ codebook including HARQ-ACK bits, and may transmit the HARQ codebook to the base station. In this case, different methods may be applied according to the type of the HARQ codebook.

When generation of a T1 HARQ codebook is indicated to the terminal, a method of generating a T1 HARQ codebook according to the PTM scheme 1 may be different from a method of generating a T1 HARQ codebook according to the PTM scheme 2. For a method of generating a T1 HARQ codebook according to the PTM scheme 1, a method of generating a T2 HARQ codebook according to the PTM scheme 1, and a method of generating a T2 HARQ codebook according to the PTM scheme 2, the existing method may be reused.

In the PTM scheme 1 to which a T1 HARQ codebook and a T2 HARQ codebook are applied, terminals belonging to a group may receive common DCI, and since the amount of HARQ-ACKs is small, there may be fewer issues with the HARQ codebook. In the PTM scheme 2 to which a T2 HARQ codebook is applied, the terminal receives DCI scrambled by a C-RNTI, and thus the T2 HARQ codebook may be appropriately generated.

When generation of a T1 HARQ codebook is indicated and enabling or disabling of HARQ-ACK feedback is dynamically indicated in the PTM scheme 2 to which a T1 HARQ codebook is applied, a HARQ-ACK feedback method will be described below. When the terminal feeds back a HARQ-ACK for a PDSCH scrambled with a C-RNTI in the PTM scheme 1, a HARQ-ACK of the multicast PDSCH may be multiplexed.

### 3.2.1.1 HARQ-ACK feedback enabling method

A case in which HARQ-ACK feedback is enabled may be considered. The terminal may decode a multicast PDSCH (e.g., TB), and a decoding result (e.g., HARQ-ACK feedback) for the multicast PDSCH may be transmitted according to Table 1 below. According to Table 1, one HARQ-ACK bit may be transmitted.

**[Table 1]**

| **Decoding result of TB** | **HARQ-ACK feedback** |
|---|---|
| ACK | No transmission |
| NACK | NACK transmission |
| DTX | No transmission |

The HARQ codebook may include one or more HARQ sub-codebooks. When the HARQ sub-codebook needs to include the HARQ-ACK bit for the multicast PDSCH, the terminal may regard a preset value as the value of the corresponding HARQ-ACK bit. Here, the NACK-only feedback operation may be extended. In this case, NACK and non-NACK (e.g., ACK and DTX) may be distinguished. Alternatively, the NACK-only feedback operation may not be applied. That is, the HARQ-ACK feedback may be used as it is. In this case, ACK and non-ACK (e.g., NACK and DTX) may be distinguished.

When the decoding result of the TB is classified into NACK and non-NACK, each bit in the HARQ sub-codebook may indicate ACK (e.g., non-NACK) or NACK. For example, a bit set to 0 in the HARQ sub-codebook may indicate ACK, and a bit set to 1 in the HARQ sub-codebook may indicate NACK. Alternatively, a bit set to 0 in the HARQ sub-codebook may indicate NACK, and a bit set to 1 in the HARQ sub-codebook may indicate ACK.

**Method 3.2-6:** When the decoding result of the TB is NACK, the corresponding decoding result may be expressed as NACK in the HARQ sub-codebook. When the decoding result of the TB is not NACK, the corresponding decoding result may be expressed as ACK in the HARQ sub-codebook.

**Method 3.2-7:** When the decoding result of the TB is NACK, the corresponding decoding result may be expressed as ACK in the HARQ sub-codebook. When the decoding result of the TB is not NACK, the corresponding decoding result may be expressed as NACK in the HARQ sub-codebook.

According to Method 3.2-6, the base station may determine that NACK has occurred in a PDSCH candidate corresponding to the bit indicating NACK in the HARQ sub-codebook. Accordingly, the base station may retransmit the TB corresponding to the NACK. When DTX occurs, the terminal may express the DTX as ACK in the HARQ sub-codebook. When ACK is received, the base station may not be able to distinguish the occurrence of ACK or DTX for the TB corresponding to the bit indicating the ACK in the HARQ sub-codebook. However, since the base station instructs the terminal to perform the NACK-only feedback operation, it may only identify whether NACK has occurred. The above-described HARQ-ACK feedback operation may be shown in Table 2 below.

**[Table 2]**

| **Decoding result of TB** | **HARQ-ACK feedback** |
|---|---|
| ACK | ACK transmission |
| NACK | NACK transmission |
| DTX | ACK transmission |

According to Method 3.2-7, the base station may determine that NACK has occurred in a PDSCH candidate corresponding to the bit indicating ACK in the HARQ sub-codebook. Accordingly, the base station may retransmit the TB corresponding to the bit indicating the ACK in the HARQ sub-codebook. When performing the NACK-only feedback operation is indicated as in Method 3.2-6, the base station may only identify whether NACK has occurred. According to Method 3.2-7, when DTX occurs in a PDSCH candidate, the corresponding DTX may be expressed as NACK in the HARQ sub-codebook. This operation may be the same as the operation of expressing an unassigned PDSCH candidate with NACK. The above-described HARQ-ACK feedback operation may be as shown in Table 3 below.

**[Table 3]**

| **Decoding result of TB** | **HARQ-ACK feedback** |
|---|---|
| ACK | NACK transmission |
| NACK | ACK transmission |
| DTX | NACK transmission |

When the decoding result of the TB is classified into ACK and non-ACK, each bit in the HARQ sub-codebook may indicate ACK or NACK (e.g., non-ACK). When the decoding result of the TB is NACK or DTX, NACK or DTX may be expressed as NACK in the HARQ sub-codebook.

**Method 3.2-8:** When the decoding result of the TB is ACK, the corresponding decoding result may be expressed as ACK in the HARQ sub-codebook. When the decoding result of the TB is not ACK, the corresponding decoding result may be expressed as NACK in the HARQ sub-codebook. Method 3.2-8 may be performed as shown in Table 4 below.

**[Table 4]**

| **Decoding result of TB** | **HARQ-ACK feedback** |
|---|---|
| ACK | ACK transmission |
| NACK | NACK transmission |
| DTX | NACK transmission |

### 3.2.1.2 HARQ-ACK feedback disabling method

A case in which HARQ-ACK feedback is disabled may be considered. The terminal may decode a multicast PDSCH and may not perform HARQ-ACK feedback according to Table 5 below.

**[Table 5]**

| **Decoding result of TB** | **HARQ-ACK feedback** |
|---|---|
| ACK | No transmission |
| NACK | No transmission |
| DTX | No transmission |

DCI for allocating a multicast PDSCH may disable or enable HARQ-ACK feedback. In this case, the terminal may generate a HARQ codebook including HARQ-ACK. Even when HARQ-ACK feedback is disabled, the terminal may generate a T1 HARQ codebook including HARQ-ACK (or known bit) for a PDSCH candidate.

When a HARQ-ACK for the multicast PDSCH is to be included in the HARQ sub-codebook, the terminal may regard a preset value as the value of the corresponding HARQ-ACK bit. A bit set to '0' in the HARQ sub-codebook may indicate ACK, and a bit set to '1' in the HARQ sub-codebook may indicate NACK. Alternatively, a bit set to '0' in the HARQ sub-codebook may indicate NACK, and a bit set to '1' in the HARQ sub-codebook may indicate ACK

When HARQ-ACK feedback is disabled, the base station may not receive (e.g,, decode) the HARQ-ACK. Therefore, the HARQ-ACK bit for the PDSCH candidate in the HARQ sub-codebook may be set to an arbitrary value.

**Method 3.2-9:** Irrespective of the decoding result of the TB, each bit in the HARQ sub-codebook may be fixed to an arbitrary value, a value indicating ACK, or a value indicating NACK. Methods 3.2-9 may be performed as shown in Table 6.

**[Table 6]**

| **Decoding result of TB** | **HARQ-ACK feedback** |
|---|---|
| ACK | ACK or NACK |
| NACK | ACK or NACK |
| DTX | ACK or NACK |

The terminal may transmit 1 bit information to the base station. Even when HARQ-ACK feedback is disabled, the terminal may feedback HARQ-ACK using additional information (e.g., 1-bit information). Alternatively, the terminal may inform the base station whether or not DTX has occurred by using additional information.

**Method .2-10:** When the decoding result of the TB is ACK, the corresponding decoding result may be expressed as ACK in the HARQ sub-codebook. When the decoding result of the TB is not ACK, the corresponding decoding result may be expressed as NACK in the HARQ sub-codebook. Method 3.2-10 may be performed as shown in Table 7 below.

**[Table 7]**

| **Decoding result of TB** | **HARQ-ACK feedback** |
|---|---|
| ACK | ACK |
| NACK | NACK |
| DTX | NACK |

According to Method 3.2-10, the terminal may inform the base station whether the decoding result of the TB is ACK. The base station may determine whether to retransmit the TB according to the decoding result (i.e., ACK or NACK) of the TB.

**Method 3.2-11:** When the decoding result of the TB is DTX, the corresponding decoding result may be expressed as NACK in the HARQ sub-codebook. When the decoding result of the TB is not DTX, the corresponding decoding result may be expressed as ACK in the HARQ sub-codebook. Method 3.2-11 may be performed as shown in Table 8 below.

**[Table 8]**

| **Decoding result of TB** | **HARQ-ACK feedback** |
|---|---|
| ACK | ACK |
| NACK | ACK |
| DTX | NACK |

According to Method 3.2-11, when the TB is decoded, the terminal may inform the base station of whether DTX has occurred by transmitting ACK to the base station regardless of the decoding result (i.e., ACK or NACK) of the TB. The base station may determine whether to retransmit DCI for the TB according to the decoding result (i.e., ACK or NACK) of the TB.

### 3.2.2 Method of supporting a terminal for low-power operation

The terminal may additionally perform a discontinuous reception (DRX) operation for multicast data (e.g., multicast PDSCH) as well as a DRX operation for unicast data (e.g., unicast PDSCH). In the PTM scheme 1, terminals belonging to a group may operate based on information element(s) included in DCI scrambled by an M-RNTI. Therefore, all terminals belonging to the group cannot perform transmission according to an active time. In the PTM scheme 2, terminal(s) may operate based on information element(s) included in DCI scrambled by a C-RNTI. Therefore, the corresponding terminal(s) does not need to perform a separate DRX operation. When the PTM scheme 1 and the PTM scheme 2 are dynamically switched, the terminal may perform two DRX operations.

One M-RNTI may be configured. Alternatively, a plurality of M-RNTIs may be configured. For example, the number of M-RNTIs may be set equal to the number of multicast groups or multicast identifiers. In this case, the DRX operation may be independently performed for each M-RNTI. In the proposed method, the terminal may perform different DRX operations (e.g., M-DRX operation and U-DRX operation). A timer required to perform the DRX operation may be separately set for the terminal through RRC signaling. The DRX for multicast may be expressed as M-DRX, and the DRX for unicast may be expressed as U-DRX. When performing one DRX, the corresponding DRX may be expressed as C-DRX. When the M-RNTI is associated with one DRX, the terminal may receive a multicast PDSCH in an active time according to the DRX. The base station may allocate a multicast PDSCH to the terminals belonging to the group by using DCI scrambled by the M-RNTI. When DCI scrambled by the M-RNTI is transmitted at a time out of the active time, some terminals may not receive the DCI. Accordingly, the base station may allocate a PDSCH (e.g., multicast PDSCH) to some terminals by using DCI scrambled by a C-RNTI.

When a PDSCH or PUSCH is allocated by the base station, the terminal performing the DRX operation may start a timer (e.g., a HARQ RTT timer). The terminal may assume that the base station can perform retransmission when the HARQ RTT timer expires. In an example, the DRX operation may be limited to a long DRX. Thereafter, the terminal may start a timer (e.g., retransmission timer). The terminal may assume that the retransmitted data will be received before the corresponding timer expires.

When HARQ-ACK feedback is disabled, the above-described operation may be unnecessary. According to some operations of Method 3.2-2 and/or Method 3.2-3, the HARQ RTT timer and/or retransmission timer may not be started in the M-DRX operation or the C-DRX operation.

When the M-DRX operation is configured to the terminal, according to some operations of Method 3.2-2 and/or Method 3.2-3, the HARQ RTT timer and/or retransmission timer may not be set. When the C-DRX operation is configured to the terminal, the HARQ RTT timer and/or the retransmission timer may be set when DCI scrambled with an M-RNTI is received. However, the terminal may not start the HARQ RTT timer and/or the retransmission timer.

In some operations of Method 3.2-1 and/or Method 3.2-2, the HARQ RTT timer and/or retransmission timer may or may not be started. When DCI scrambled with an M-RNTI is received, the terminal may start the HARQ RTT timer and/or retransmission timer to perform the HARQ-ACK feedback operation. Alternatively, when HARQ-ACK feedback is disabled by RRC signaling and/or DCI, the terminal may not start the above-described HARQ RTT timer and/or retransmission timer. That is, the HARQ RTT timer and/or the retransmission timer may not be used in the terminal.

**Method 3.2-12:** Disabling of HARQ-ACK feedback may be indicated to the terminal. In this case, the HARQ RTT timer and/or the retransmission timer may not be set in the terminal. Alternatively, even when the HARQ RTT timer and/or the retransmission timer are set, if the HARQ-ACK feedback is disabled, the terminal may not start the HARQ RTT timer and/or the retransmission timer.

When HARQ feedback is enabled by DCI, the above-described HARQ RTT timer and/or retransmission timer is started, but when HARQ feedback is disabled, the above-described HARQ RTT timer and/or retransmission timer may not be applied.

### 3.3 Method of determining the type of multicast HARQ codebook

The terminal may generate a HARQ codebook including HARQ-ACK bit(s) for multicast PDSCH(s), and may transmit the HARQ codebook on a PUCCH or PUSCH.

The terminal may generate a T1 HARQ codebook or a T2 HARQ codebook for a unicast PDSCH. The base station may inform the terminal of a type (e.g., T1 or T2) of the HARQ codebook for multicast PDSCH(s) by using RRC signaling. The type of the HARQ codebook for a unicast PDSCH (hereinafter referred to as 'unicast HARQ codebook') and the type of the HARQ codebook for multicast PDSCH(s) (hereinafter referred to as 'multicast HARQ codebook') may be indicated to be equal. In this case, the type of the unicast HARQ codebook and the type of the multicast HARQ codebook may be indicated by one RRC signaling. Alternatively, the type of the unicast HARQ codebook and the type of the multicast HARQ codebook may be indicated to be different from each other. In this case, a separate RRC signaling may be used to indicate the type of the multicast HARQ codebook.

**Method 3.3-1:** The type of the multicast HARQ codebook may be indicated to the terminal by RRC signaling. The terminal may generate a T1 HARQ codebook or a T2 HARQ codebook for the multicast PDSCH according to the indication of the base station.

In the procedure of generating and transmitting the T1 HARQ codebook, the terminal may determine the amount of HARQ-ACKs according to the number of K1 values that the multicast PDSCH may have. In the procedure of generating and transmitting the T2 HARQ codebook, the terminal may estimate the amount of HARQ-ACKs based on a value of a DAI indicated by DCI by which the multicast PDSCH is allocated.

When multicast PDSCHs having different priorities are received or when two or more multicast PDSCHs having the same priority are received, the terminal may generate a different HARQ codebook for each of the multicast PDSCHs. In this case, the base station may independently configure the type of each of the multicast HARQ codebooks to the terminal. Alternatively, the base station may configure a common type for all multicast HARQ codebooks to the terminal. The terminal may generate the T1 HARQ codebook and/or T2 HARQ codebook according to the configuration of the base station.

For example, the base station may configure multicast to the terminal by a multicast control channel (MCCH), and may configure a plurality of multicast traffic channels (MTCH) to the terminal. Even when the MTCH is divided into a plurality, the type of the HARQ codebook may be interpreted as one. The terminal may apply the same type of HARQ codebook to different multicast transmissions.

Meanwhile, the HARQ codebook for the multicast PDSCH may not be separately configured. This operation may mean "the type of unicast HARQ codebook is reused when three or more HARQ-ACK bits are generated". For example, in the PTM scheme 2, DCI scrambled with a C-RNTI may allocate a multicast PDSCH, and the DCI may independently indicate a PUCCH resource for each terminal. When Method 3.3-2 below is applied, the terminal may multiplex HARQ-ACK bit(s) for the unicast PDSCH as well as the HARQ-ACK bit(s) for the multicast PDSCH.

**Method 3.3-2:** The type of the multicast HARQ codebook (e.g., sub-codebook) may be the same as the type of the unicast HARQ codebook (e.g., sub-codebook). The terminal may estimate the type of the unicast HARQ codebook as the type of the multicast HARQ codebook.

A PUCCH resource set for transmission of the unicast HARQ codebook or three or more HARQ-ACK bits may not be configured to the terminal. In this case, the terminal may not be able to apply Method 3.3-2. In this case, the terminal may not be able to use the multicast HARQ codebook, and may feedback only the HARQ-ACK for the multicast PDSCH having the highest priority to the base station. The above-described operation may be applied to the PTM scheme 1 and/or the PTM scheme 2.

**Method 3.3-3:** The base station may not configure a PUCCH resource set of three or more HARQ-ACK bits to the terminal. In this case, the terminal may feedback only the HARQ-ACK for the multicast PDSCH having the highest priority to the base station.

### Chapter 4: Reception method of unicast and multicast

The terminal may support both unicast transmission and multicast transmission. DCI for allocating a multicast PDSCH and DCI for allocating a unicast PDSCH may be configured differently. In the PTM scheme 1, DCI scrambled with an M-RNTI may not indicate different information for each terminal belonging to a group.

FIG. 8 is a conceptual diagram illustrating a first exemplary embodiment of a temporal order of a PDCCH and a PUCCH in unicast/multicast transmission.

Referring to FIG. 8, first DCI scrambled with a C-RNTI (e.g., unicast PDCCH) may be received first by the terminal, and second DCI scrambled with an M-RNTI (e.g., multicast PDCCH) may be received by the terminal after the reception of the first DCI. In this case, it may be difficult that a unicast HARQ codebook and a PUCCH resource for the unicast PDSCH allocated by the first DCI and/or a multicast HARQ codebook and a PUCCH resource for the multicast PDSCH allocated by the second DCI are appropriately indicated. In this case, the terminal may transmit a HARQ-ACK for a PDSCH having a higher priority on a PUCCH based on a result of comparing priorities. For example, a priority may be assigned to each multicast PDSCH, and a priority of multicast transmission may be higher than that of unicast transmission. In this case, the terminal may transmit HARQ-ACK bit(s) for some or all of the multicast PDSCH(s) on a PUCCH.

For example, the terminal may directly compare the priority of multicast transmission (e.g., multicast PDSCH) with the priority of unicast transmission. Alternatively, when the priority of multicast transmission exceeds a preset threshold, the terminal may determine that the priority of multicast transmission is higher than that of unicast transmission. The terminal may generate HARQ-ACK bit(s) for multicast PDSCH(s) having higher priorities than the unicast transmission, and may report the HARQ-ACK bit(s) to the base station. Alternatively, when the priority of multicast transmission is higher than that of unicast transmission, the terminal may generate a HARQ-ACK bit for the multicast PDSCH having the highest priority, and transmit the HARQ-ACK bit to the base station.

On the other hand, the second DCI scrambled with the M-RNTI may be first received by the terminal, and the first DCI scrambled with the C-RNTI may be received by the terminal after reception of the second DCI. In this case, an appropriate PUCCH resource may be indicated for each terminal. In this case, the terminal may compare priorities of the unicast transmission and the multicast transmission, and may multiplex decoding results (e.g., HARQ-ACK bits) of some or all of PDSCHs for transmission with higher priorities.

For example, when the priority of multicast transmission exceeds a preset threshold, the terminal may regard the priority of the multicast transmission as the same as a priority of unicast transmission for transmission of URLLC traffic. When the priority of multicast transmission does not exceed the preset threshold, the terminal may regard the priority of the multicast transmission as the same as a priority of unicast transmission for transmission of eMBB traffic. When the base station instructs the terminal to multiplex URLLC traffic and eMBB traffic, the terminal may generate a HARQ codebook including HARQ-ACK bit(s) for all multicast transmission(s) and/or all unicast transmission(s). When the base station instructs the terminal to transmit only URLLC traffic, the terminal may generate a HARQ codebook including HARQ-ACK bit(s) for multicast transmission(s) and/or unicast transmission(s) having the same priority as URLLC traffic. In this case, the terminal may not be able to transmit, to the base station, the HARQ-ACK bit(s) for some transmission among the multicast transmission(s) and/or unicast transmission(s).

### 4.1 Multiplexing of multicast HARQ codebook and unicast HARQ codebook

Since DCI scrambled with an M-RNTI is used in the PTM scheme 1, the same control information may be indicated to all terminals belonging to a group. Accordingly, the base station may indicate a PUCCH resource to terminal(s) so that all terminals belonging to the group feedback the same number n of HARQ-ACK bits. n may be a natural number. The base station may assume that all terminals belonging to the group receive only a multicast PDSCH, and may allocate a multicast PDSCH and PUCCH resources to all terminals. On the other hand, since DCI scrambled with a C-RNTI is used in the PTM scheme 2, control information may be independently indicated for each terminal. In this case, it may be assumed that the terminal receives not only a multicast PDSCH but also a unicast PDSCH.

The terminal may receive (e.g., decode) a part of multicast PDSCHs and/or unicast PDSCHs according to processing capability. In this case, the terminal may generate NACK for an un-decoded multicast PDSCH and/or unicast PDSCH.

Since DCI scrambled with an M-RNTI is transmitted in the PTM scheme 1, the base station may not be able to indicate to the terminal a PUCCH or PUSCH suitable for transmitting a HARQ sub-codebook for a plurality of multicast PDSCHs. Since DCI scrambled with a C-RNTI is transmitted in the PTM scheme 2, the base station may indicate to the terminal a PUCCH or PUSCH suitable for transmitting a HARQ codebook.

The terminal may assume that frequency division multiplexing (FDM) scheduling for a multicast PDSCH and a unicast PDSCH is allowed according to RRC signaling. Without the above configuration, the terminal may assume that time division multiplexing (TDM) scheduling for a multicast PDSCH and a unicast PDSCH is performed. A method of generating a HARQ codebook when the FDM scheduling is allowed may be distinguished from a method of generating a HARQ codebook when the TDM scheduling is used.

For example, when the FDM scheduling is allowed, the terminal may independently generate a HARQ sub-codebook for the multicast PDSCH and a HARQ sub-codebook for the unicast PDSCH. When the TDM scheduling is performed, the terminal may generate one HARQ codebook without distinction between the multicast HARQ sub-codebook and the unicast HARQ sub-codebook.

**Method 4.1-1:** The terminal may generate a HARQ sub-codebook for each multicast group, generate one multicast HARQ sub-codebook by concatenating the HARQ sub-codebooks, and generate one HARQ codebook by concatenating the multicast HARQ sub-codebook and a unicast HARQ sub-codebook.

The terminal may receive one or more multicast PDSCHs and a unicast PDSCH. The terminal may generate a HARQ sub-codebook for each of the multicast PDSCH(s) and the unicast PDSCH. All HARQ sub-codebooks generated by the terminal may have the same type. For example, when a T1 HARQ codebook is configured, the HARQ sub-codebooks may be T1 HARQ sub-codebooks. When a T2 HARQ codebook is configured, the HARQ sub-codebooks may be T2 HARQ sub-codebooks.

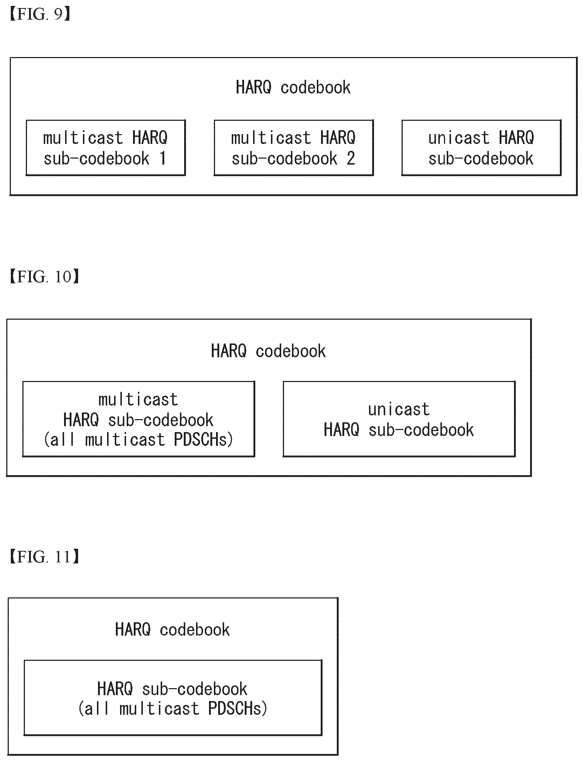

FIG. 9 is a block diagram illustrating a first exemplary embodiment of a method for generating a HARQ codebook based on Method 4.1-1.

Referring to FIG. 9, the terminal may receive two multicast PDSCHs and one unicast PDSCH, may generate three HARQ sub-codebooks for three PDSCHs, and may generate one HARQ codebook by concatenating the three sub-codebooks. The terminal may transmit the one HARQ codebook on a PUCCH or PUSCH. The multicast HARQ sub-codebook may be configured for each multicast group, multicast identifier, or multicast PDSCH. When the T1 HARQ codebook is generated, the size of the HARQ sub-codebook may not be dynamically changed. Accordingly, the terminal may know the size of the HARQ sub-codebook for each of the multicast PDSCHs.

When the T2 HARQ codebook is generated, a separate DAI may be defined for each multicast group or multicast identifier, and each of DCI(s) for allocating the multicast PDSCH(s) may include the separate DAI. That is, the separate DAI may be indicated to the terminal. A separate DAI may be defined for unicast transmission. The size of the HARQ codebook generated by the terminal may be a sum of the sizes of the HARQ sub-codebooks. The size of the HARQ codebook may be indicated by a separate DAI (e.g., T-DAI) included in the DCI for allocating the unicast PDSCH. In order to support this operation, the DCI for allocating unicast transmission may be received at the same time as the DCI for allocating multicast transmission. Alternatively, the DCI for allocating unicast transmission may be received after the DCI for allocating multicast transmission.

**Method 4.1-2:** If DCI for allocating a unicast PDSCH includes a T-DAI in a procedure of generating a T2 HARQ codebook, the terminal may generate the T2 HARQ codebook for both dynamically allocated multicast PDSCH and unicast PDSCH.

The terminal may concatenate the HARQ sub-codebooks according to a preset order. When a plurality of multicast PDSCHs are received, the plurality of multicast PDSCHs may be identified by a multicast identifier(s) (e.g., multicast ID or multicast group ID). The base station may indicate the multicast ID or the multicast group ID to the terminal. The multicast ID or the multicast group ID may be determined based on the M-RNTI. For example, the terminal may determine the multicast ID or the multicast group ID according to the order of M-RNTIs (e.g., the order of receiving DCIs associated with the M-RNTI).

**Method 4.1-3:** When Method 4.1-1 is applied, the terminal may generate one multicast HARQ sub-codebook by concatenating HARQ sub-codebooks according to an order of multicast IDs or multicast group IDs. The terminal may generate one HARQ codebook by concatenating the multicast HARQ sub-codebook and the unicast HARQ sub-codebook.

Alternatively, the terminal may generate one HARQ sub-codebook for multicast transmission. The terminal may receive (e.g., decode) some of multicast PDSCHs based on priorities among multicast PDSCHs allocated by the base station. Accordingly, the terminal may generate a HARQ sub-codebook of a small size instead of a HARQ sub-codebook of each multicast PDSCH.

**Method 4.1-4:** The terminal may generate one HARQ sub-codebook regardless of the multicast group, and may concatenate the one HARQ sub-codebook (i.e., multicast HARQ sub-codebook) with the unicast HARQ sub-codebook

In the procedure of generating the T1 HARQ codebook, a PDSCH candidate in which a multicast PDSCH may be received may be determined based on configuration of time and frequency resources. The reason is that the HARQ-ACK feedback timing and/or TDD slot pattern is fixed by RRC signaling. The terminal may decode two or more PDSCHs overlapping in the time domain according to processing capability. The terminal may generate NACK for the PDSCH un-decoded according to processing capability.

The terminal may arrange the multicast PDSCHs in a preset order regardless of the multicast IDs. Here, the priority of the multicast PDSCH may not be considered. Multicast PDSCH candidates may be arranged in chronological order in the same serving cell. If two or more PDSCH candidates overlap in the time domain, start and length indicator values (SLIVs) of the two or more PDSCH candidates may be compared. When a start symbol and an end symbol according to a SLIV of a first PDSCH candidate precede a start symbol and an end symbol according to a SLIV of a second PDSCH candidate, in the HARQ codebook (or HARQ sub-codebook), HARQ-ACK bit(s) for the first PDSCH candidate may be disposed before HARQ-ACK bit(s) for the second PDSCH candidate. In this case, HARQ-ACK bits for all PDSCH candidates may be valid. However, depending on the processing capability of the terminal, HARQ-ACK bit(s) for some PDSCH candidates may be expressed as NACK.

Two or more PDSCH candidates may be allocated regardless of the processing capability of the terminal. When time domain resource assignment (TDRA) indexes r, HARQ-ACK feedback timings k, and slot offsets (nD) for two or more PDSCH candidates are the same, two or more PDSCH candidates may have the same order j. Accordingly, the HARQ sub-codebook may include one HARQ-ACK bit, and the base station may transmit one PDSCH candidate (i.e., PDSCH) among two or more PDSCH candidates having the same (r, k, nD). The above-described scheduling operation may be effectively utilized in unicast transmission. In order to support multicast transmission, the terminal may receive two or more PDSCH candidates according to processing capability.

**Method 4.1-5:** The order j of two or more PDSCH candidates having the same (r, k, nD) may be expressed differently.

According to Method 4.1-5, the order j of two or more PDSCH candidates having the same (r, k, nD) may increase for each PDSCH candidate. This operation may mean "increasing the size of the HARQ sub-codebook for the multicast PDSCHs by the number of PDSCH candidates". For example, pseudo codes defined in Table 9 below may be considered. In the procedure of generating the T1 HARQ codebook including the multicast HARQ sub-codebook(s), the order of PDSCH candidates may be determined based on the pseudo codes defined in Table 9.

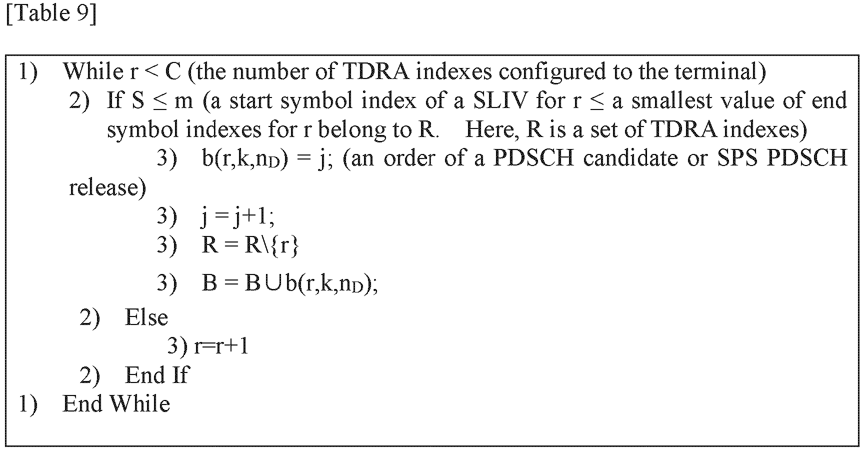

When only some PDSCH candidates (e.g., J PDSCH candidates) need to be selected according to the processing capability of the terminal, the order j of PDSCH candidates may not need to exceed J. In order to support this operation, h may be introduced. h may be used to terminate the 'while loop' when j exceeds J. In this case, the order of the PDSCH candidates may be determined based on pseudo codes defined in Table 10 below. In the procedure of generating the T1 HARQ codebook including the multicast HARQ sub-codebook(s), the order of PDSCH candidates may be determined based on the pseudo codes defined in Table 10.

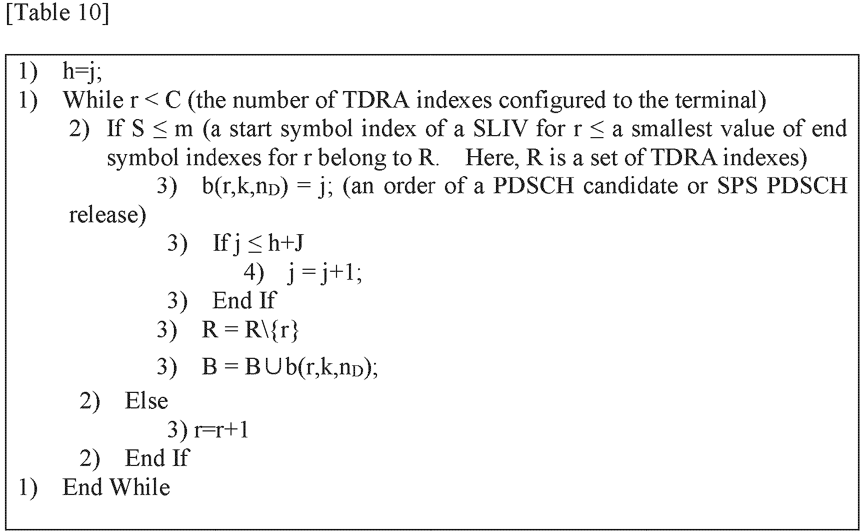

In the procedure of generating the T2 HARQ codebook, the amount of HARQ-ACKs may be different for each terminal belonging to a group. DCI scrambled with an M-RNTI may not support scheduling for transmission of HARQ-ACKs having different amounts. DCI scrambled with a C-RNTI or DCI for unicast transmission may include information for multicast transmission. The size of the HARQ codebook generated by the terminal may include a sum of the sizes of the HARQ sub-codebooks. The size of the HARQ codebook may be indicated by a DAI (e.g., T-DAI) included in the DCI for allocating unicast transmission. In order to support this operation, DCI allocating unicast transmission may be received simultaneously with DCI allocating multicast transmission. Alternatively, DCI for allocating unicast transmission may be received after DCI for allocating multicast transmission.

FIG. 10 is a block diagram illustrating a second exemplary embodiment of a method for generating a HARQ codebook based on Method 4.1-1.

Referring to FIG. 10, the terminal may receive a plurality of multicast PDSCHs and may receive a unicast PDSCH. The terminal may generate one multicast HARQ sub-codebook for the plurality of multicast PDSCHs (e.g., all received multicast PDSCHs), and may generate a unicast HARQ sub-codebook for the unicast PDSCH. One multicast HARQ sub-codebook may be generated for a multicast group. The terminal may generate the HARQ codebook by concatenating the multicast HARQ sub-codebook and the unicast HARQ sub-codebook, and may transmit the HARQ codebook on a PUCCH or PUSCH.

Alternatively, the terminal may generate a HARQ codebook without distinction between the multicast PDSCH and the unicast PDSCH.

**Method 4.1-6:** The terminal may generate HARQ sub-codebook(s) for PDSCH(s) regardless of multicast transmission and unicast transmission, and may generate one HARQ codebook by concatenating the HARQ sub-codebooks.

In the procedure of generating the T1 HARQ codebook, Method 4.1-6 may be the same as Method 4.1-4 except that unicast transmission is additionally considered in Method 4.1-4. The pseudo code(s) defined in Table 9 and/or Table 10 may be changed for application of Method 4.1-6, and the modified pseudo code(s) may be easily applied to Method 4.1-6. In the procedure of generating the T2 HARQ codebook, Method 4.1-6 may be the same as Method 4.1-4 except that unicast transmission is additionally considered in Method 4.1-4.

FIG. 11 is a block diagram illustrating a first exemplary embodiment of a method for generating a HARQ codebook based on Method 4.1-6.

Referring to FIG. 11, the terminal may generate a HARQ codebook without distinction between the multicast PDSCH and the unicast PDSCH.

### 4.2 Structure of DCI allocating multicast

In the PTM scheme 1, since DCI for allocating multicast is scrambled with an M-RNTI, all terminals belonging to a group may receive the DCI scrambled with the M-RNTI. In the PTM scheme 2, DCI scrambled with a C-RNTI may be used. That is, the DCI scrambled with a C-RNTI may be received by one terminal.

In the PTM scheme 1, a format of DL-related DCI may be reused as a format indicated by a field included in DCI. Some fields included in DCI cannot be commonly applied to all terminals belonging to a group.

For example, a time resource and a frequency resource of a PDSCH may be commonly used. Accordingly, a TDRA index (e.g., K0, SLIV, mapping type) and a FDRA may be identically configured for all terminals belonging to the group. DM-RS information may be identically configured for all terminals belonging to the group. Among all information elements included in DCI, the remaining information element(s) except for the above-described information elements (e.g., information on TDRA index, FDRA, and/or DM-RS) may be independently configured for each terminal.

### 4.2.1 Fields related to PDSCH

In relation to a multicast PDSCH, a field indicating the number of repetitions (e.g., the number of repetitions of the multicast PDSCH) may be included in DCI. In order to secure the reception performance of the multicast PDSCH, it is preferable that the terminal repeatedly receives the PDSCH. Although the number of repetitions may be unnecessarily large for some terminals belonging to the group, repeated transmissions of the PDSCH may be required for the remaining terminals belonging to the group. A link having the worst quality among links between the base station and the terminals belonging to the group may be identified, and the number of repetitions may be set based on the link having the worst quality.

**Method 4.2-1:** The base station may indicate to the terminal(s) the number of repetitions of the multicast PDSCH by using RRC signaling.

**Method 4.2-2:** The base station may indicate to the terminal(s) the number of repetitions of the multicast PDSCH by using DCI. A field indicating the number of repetitions of the multicast PDSCH may be included in the DCI.

The link between the terminal and the base station may undergo fading, and Method 4.2-1 or Method 4.2-2 may be applied according to a time unit of the fading. Alternatively, Method 4.2-2 may be applied for flexible scheduling.

The number of repetitions of the multicast PDSCH may be implicitly derived by a TDRA index included in the DCI. In order to support this operation, the base station may inform all terminals belonging to the group of a TDRA table by using RRC signaling. In this case, the amount of RRC signaling may increase. In order to reduce the amount of RRC signaling described above, a TDRA default A defined in a technical specification may be used. However, since the TDRA default A includes only information element(s) for receiving one PDSCH, the number of repetitions of the PDSCH may not be included in the TDRA default A.

In the PTM scheme 2, DCI for allocating a multicast PDSCH may be scrambled with a C-RNTI, or a multicast PDSCH may be scrambled with an M-RNTI. A method of distinguishing whether the DCI detected using the C-RNTI is a multicast PDSCH or a unicast PDSCH may be required. In order to support this operation, a 1-bit information element may be used.

**Method 4.2-3:** When a specific field included in DCI is set to a first value, this may indicate a PDSCH reception operation using a C-RNTI. When a specific field included in DCI is set to a second value, this may indicate a PDSCH reception operation using an M-RNTI.

### 4.2.2 Fields related to HARQ

In the PTM scheme 1, a specific field of DCI for allocating a multicast PDSCH may indicate a HARQ process ID (HPID) and/or a HARQ process number (HPN). The same HPN may be indicated to all terminals belonging to a group. That HPN may already be allocated for another TB. For example, when activation of a DL SPS is indicated to the terminal, the HPN may be calculated differently depending on a reception time of a PDSCH. Since terminals belonging to a group have different HPNs, the base station may determine an appropriate HPN for each terminal by calculating all HPNs. Alternatively, an offset may be introduced so that each terminal interprets the HPN as a different HPN.

**Method 4.2-4:** The base station may indicate to the terminal an offset (o) to be applied to derive the HPN by using RRC signaling.

**Method 4.2-5:** The base station may indicate to the terminal the number of HARQ processes allocated to the multicast PDSCH (e.g., the maximum number m) by using RRC signaling.

The terminal may calculate a result of adding the offset o to a HPID h indicated by DCI scrambled with an M-RNTI, and may regard a remainder obtained by dividing the result by the maximum number m of HARQ processes as the HPN. That is, the received PDSCH may be processed in a HARQ process ID HPN (h+o)%m.

One terminal may receive a plurality of multicast PDSCHs. Accordingly, the number of HARQ processes (e.g., the maximum number m) and/or the offset (o) may be indicated for each multicast PDSCH.

### 4.2.3 Fields related to priority

A priority of a multicast PDSCH may be set. The priority of the multicast PDSCH may be used for PDSCH reception or PUCCH transmission. When multicast PDSCH(s) and/or unicast PDSCH(s) overlap in the time domain, the terminal may select some PDSCHs based on the priorities of the multicast PDSCH(s). The terminal may transmit some PUCCHs or one PUCCH based on the priorities of the multicast PDSCH(s). Alternatively, the terminal may multiplex HARQ-ACKs in a PUSCH based on the priorities of the multicast PDSCH(s).

**Method 4.2-6:** The priority of the multicast PDSCH may be indicated by a field included in DCI for allocating the multicast PDSCH.

Two or more priorities for multicast PDSCHs may be set. In order to support various multicast transmissions, the base station may inform the terminal of a field representing the number of priorities by using RRC signaling. The size of the field expressing the number of priorities may be 3 bits or more.

**Method 4.2-7:** In Method 4.2-6, the size of the field expressing the number of priorities may be indicated to the terminal by RRC signaling.

### 4.2.4 Fields related to PUCCH

The base station may transmit information indicating enabling or disabling of HARQ-ACK feedback to the terminal. The information indicating enabling or disabling of HARQ-ACK feedback may be included in DCI for allocating a multicast PDSCH. The above-described operation may be applied to both the PTM scheme 1 and the PTM scheme 2. When a specific field of the DCI is set to a first value, this may indicate that the terminal transmits a PUCCH. When the specific field of the DCI is set to a second value, this may indicate that the terminal does not transmit a PUCCH. However, if another channel (e.g., another PUCCH and/or PUSCH) overlapping the PUCCH in the time domain is allocated, the terminal may report a HARQ-ACK or HARQ codebook for the corresponding multicast PDSCH to the base station.

**Method 4.2-8:** Enabling or disabling of HARQ-ACK feedback for the multicast PDSCH may be indicated by a specific field included in DCI for allocating the multicast PDSCH.

The base station may instruct the terminal to generate a T2 HARQ codebook. In this case, the terminal needs to know the number of HARQ-ACKs and/or the size of the HARQ codebook. In order to support this operation, DCI for allocating the multicast PDSCH may include a DAI field. Since DCI scrambled with an M-RNTI is used in the PTM scheme 1, a C-DAI field may be used, but the T-DAI field may not be used. Since DCI scrambled with a C-RNTI is used in the PTM scheme 2, both the C-DAI field and the T-DAI field may be used.

**Method 4.2-9:** The C-DAI field may mean the number of allocated multicast PDSCHs.

**Method 4.2-10:** The T-DAI field may mean the sum of the number of allocated multicast PDSCHs and the number of unicast PDSCHs.

In the PTM scheme 1, terminals belonging to a group may receive a common DCI. Therefore, DCI for allocating a multicast PDSCH may not include a transmit power control (TPC) PUCCH field. TPC commands of PUCCHs in DCI format 1_x and/or DCI format 2_2 may be summed as an open loop control.

In an example, the T-DAI field may be managed for each number of multicast IDs. DCI may include several T-DAI fields. Each T-DAI field may indicate a value of a T-DAI for a multicast ID.

When HARQ-ACK feedback is enabled, terminals belonging to a group may transmit PUCCHs, and the base station may receive PUCCH(s) having good quality. Therefore, it is preferable that the terminal repeatedly transmits the PUCCH. A PUCCH resource set indicated by *PUCCH-configCommon* may be used by the terminal(s). In this case, the base station may instruct the terminal to repeatedly transmit the PUCCH.

**Method 4.2-11:** The base station may set the number of repetitions of the PUCCH to the terminal by using RRC signaling.

**Method 4.2-12:** The base station may transmit DCI including information indicating the number of repetitions of the PUCCH to the terminal. Here, the DCI may be DCI for allocating a multicast PDSCH.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of a terminal, the method comprising:
receiving, from a base station, search space information for first downlink control information, DCI, scheduling a first multicast physical downlink shared channel, PDSCH;
receiving the first DCI from the base station by monitoring a search space indicated by the search space information using a first radio network temporary identifier, RNTI, configured for detection of the first DCI; and
receiving the first multicast PDSCH from the base station based on first scheduling information included in the first DCI.

2. The method of claim 1, wherein the search space indicated by the search space information is a common search space set.

3. The method of claim 1 or 2, further comprising:
receiving, from the base station, first physical uplink control channel, PUCCH, resource set information for multicast transmission and second PUCCH resource set information for unicast transmission,
wherein a first hybrid automatic repeat request-acknowledgement, HARQ-ACK, bit for the first multicast PDSCH is transmitted on a PUCCH resource indicated by the first PUCCH resource set information.

4. The method of one of claims 1 to 3, further comprising:
receiving, from the base station, information indicating multiplexing of HARQ-ACK bits for PDSCHs having different priorities,
wherein based on the multiplexing of the HARQ-ACK bits for the PDSCHs having the different priorities being indicated, a first HARQ-ACK bit for the first multicast PDSCH is multiplexed with a second HARQ-ACK bit for a PDSCH having a different priority from the first multicast PDSCH on a PUCCH or a physical uplink shared channel, PUSCH.

5. The method of claim 4, wherein the first DCI further includes information indicating a priority of the first multicast PDSCH.

6. The method of one of claims 1 to 5, further comprising:
receiving, from the base station, information indicating enabling of HARQ-ACK feedback for multicast transmission,
wherein based on the enabling of HARQ-ACK feedback for multicast transmission being indicated, the first DCI further includes information indicating enabling or disabling of the HARQ-ACK feedback for the first multicast PDSCH.

7. The method of one of claims 1 to 6, further comprising:
receiving, from the base station, information indicating a type of HARQ codebook for multicast transmission,
wherein the HARQ codebook is classified into a type 1 HARQ codebook and a type 2 HARQ codebook, and a first HARQ-ACK bit for the first multicast PDSCH is included in a HARQ codebook having a type indicated by the base station.

8. The method of one of claims 1 to 7, further comprising:
receiving, from the base station, information on repetition transmission numbers for the first multicast PDSCH,
wherein the first scheduling information included in the first DCI indicates one repetition transmission number among the repetition transmission numbers, and the first multicast PDSCH is repeatedly transmitted by the one repetition transmission number.

9. The method of one of claims 1 to 8, further comprising:
receiving, from the base station, information indicating that a negative ACK, NACK, -only bit scheme is supported,
wherein the first HARQ-ACK bit is generated according to the NACK-only bit scheme, or based on the first HARQ-ACK bit being multiplexed with another HARQ-ACK bit, the NACK-only bit scheme is not applied to the first HARQ-ACK bit.

10. The method of one of claims 1 to 9, further comprising:
receiving second DCI from the base station;
receiving a second multicast PDSCH from the base station based on second scheduling information included in the second DCI; and
transmitting, to the base station, a HARQ codebook including a first HARQ-ACK bit for the first multicast PDSCH and a second HARQ-ACK bit for the second multicast PDSCH.

11. The method of claim 10, wherein the HARQ codebook includes a first multicast HARQ subcodebook including the first HARQ-ACK bit and a second multicast HARQ subcodebook including the second HARQ-ACK bit, and the first multicast PDSCH and the second multicast PDSCH are distinguished by different multicast identifiers.

12. The method of one of claims 1 to 11, further comprising:
receiving third DCI from the base station;
receiving a unicast PDSCH from the base station based on third scheduling information included in the third DCI; and
transmitting, to the base station, a HARQ codebook including a first HARQ-ACK bit for the first multicast PDSCH and a third HARQ-ACK bit for the unicast PDSCH.

13. The method of claim 12, wherein the HARQ codebook includes a first multicast HARQ subcodebook including the first HARQ-ACK bit and a unicast HARQ subcodebook including the third HARQ-ACK bit, and the first multicast HARQ subcodebook is distinguished by a multicast identifier.

14. A method of a base station, the method comprising:
transmitting, to a terminal, search space information for first downlink control information, DCI, scheduling a first multicast physical downlink shared channel, PDSCH;
transmitting the first DCI scrambled by a first radio network temporary identifier, RNTI, configured for detection of the first DCI to the terminal in a search space indicated by the search space information; and
transmitting the first multicast PDSCH to the terminal based on first scheduling information included in the first DCI.

15. The method of claim 14, further comprising:
transmitting, to the terminal, first physical uplink control channel, PUCCH, resource set information for multicast transmission and second PUCCH resource set information for unicast transmission,
wherein a first hybrid automatic repeat request-acknowledgement, HARQ-ACK, bit for the first multicast PDSCH is received on a PUCCH resource indicated by the first PUCCH resource set information.
